# EUROPEAN PATENT APPLICATION

(11) **EP 4 132 097 A1**
(43) Date of publication of application: **08.02.2023**
(21) Application number: 21793267.2
(22) Date of filing: 22.04.2021
(51) Int. Cl.: H04W 36/00

(54) **COMMUNICATION METHOD, APPARATUS AND SYSTEM**

(30) Priority: 23.04.2020 CN 202010329493; 29.05.2020 CN 202010478748
(71) Applicant: Huawei Technologies Co., Ltd., Shenzhen, Guangdong 518129, (CN)
(72) Inventor: ZHUO, Yibin, Shenzhen, Guangdong 518129 (CN); ZHU, Yuanping, Shenzhen, Guangdong 518129 (CN); LIU, Jing, Shenzhen, Guangdong 518129 (CN); SHI, Yulong, Shenzhen, Guangdong 518129 (CN); CAO, Zhenzhen, Shenzhen, Guangdong 518129 (CN)
(74) Representative: Maiwald GmbH
(86) International application number: PCT/CN2021/089005
(87) International publication number: WO 2021/213470

(57) **Abstract**

This application relates to the field of communication technologies, and provides a communication method, apparatus, and system. In the method, a source donor node receives a measurement report from an IAB node through a source parent node, and determines, based on the measurement report, to hand over the IAB node from the source parent node to a target parent node. The source donor node sends configuration information to the IAB node through the source parent node. In a process in which the IAB node is handed over from the source parent node to the target parent node, the IAB node sends uplink data to a target donor node by using the configuration information through the target parent node. The configuration information includes: a routing configuration and/or a bearer mapping configuration. The uplink data includes uplink user plane data and/or uplink control plane data.

## Description

This application claims priority to Chinese Patent Application No. 202010329493.9, filed with the China National Intellectual Property Administration on April 23, 2020 and entitled "COMMUNICATION METHOD, APPARATUS, AND SYSTEM", and claims priority to Chinese Patent Application No. 202010478748.8, filed with the China National Intellectual Property Administration on May 29, 2020 and entitled "COMMUNICATION METHOD, APPARATUS, AND SYSTEM", which are incorporated herein by reference in their entireties.

### TECHNICAL FIELD

This application relates to the field of communication technologies, and in particular, to a communication method, apparatus, and system.

### BACKGROUND

In comparison with a 4th generation (4th generation, 4G) system, a 5th generation (5th generation, 5G) system imposes stricter requirements on various network performance indicators in all aspects. For example, a capacity indicator is increased by 1000 times, wider coverage is required, and ultra-high reliability and an ultra-low delay are required. In one aspect, in view of rich frequency resources on a high-frequency carrier, networking by using high-frequency small cells is increasingly popular in a hotspot area to meet an ultra-high capacity requirement of 5G. High-frequency carriers have a poor propagation characteristic, are severely attenuated if blocked, and have small coverage. Therefore, a large quantity of small cells need to be densely deployed. Correspondingly, it is costly to provide fiber backhaul for the large quantity of densely deployed small cells, and construction is difficult. Therefore, an economical and convenient backhaul solution is required. In another aspect, from a perspective of a requirement for wide coverage, it is difficult and costly to deploy optical fibers to provide network coverage in some remote areas. Therefore, a flexible and convenient access and backhaul solution also need to be designed.

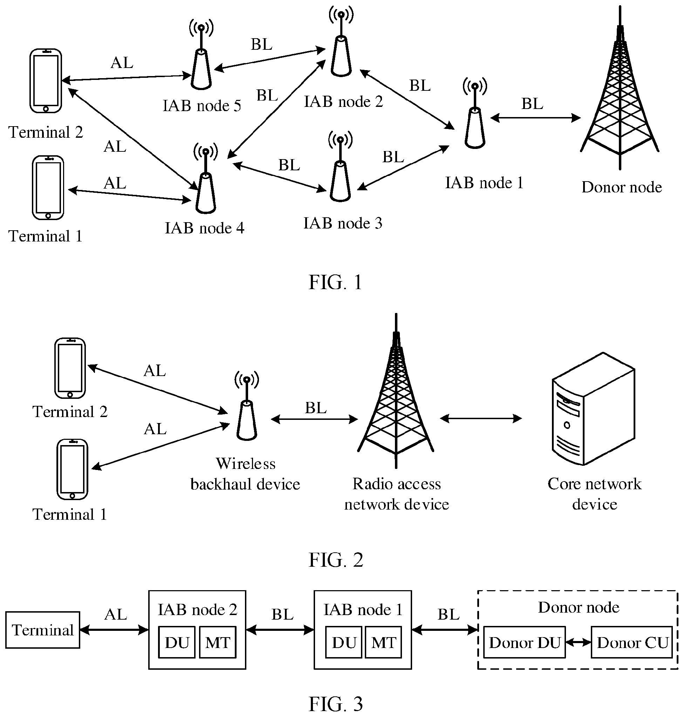

An integrated access and backhaul (integrated access and backhaul, IAB) technology provides an idea to resolve the foregoing two problems. In a network including an IAB node (an IAB network for short below), refer to FIG. 1. A terminal (Terminal) accesses the IAB node through an access link (access link, AL), and the IAB node accesses a donor node (donor node) through a backhaul link (backhaul link, BL). The IAB node provides a wireless access service for the terminal through the AL, and provides a wireless backhaul service for the terminal through the BL. In the IAB network, wireless transmission solutions through both the AL and the BL are used, to avoid optical fiber deployment and provide flexible and convenient access and backhaul solutions.

In the IAB network, the IAB node may access the donor node through a parent node. For example, an IAB node 3 in FIG. 1 may access the donor node through a parent node (namely, an IAB node 1). If the IAB node needs to hand over the parent node, an original parent node may be referred to as a source parent node, and a new parent node may be referred to as a target parent node. Currently, in an IAB node handover process, the IAB node can obtain, by using RRC signaling between the IAB node and the target parent node, information about a routing configuration and a bearer mapping configuration used to perform transmission of uplink data with the target parent node, only after a radio resource control (radio resource control, RRC) connection is established between the IAB node and a target donor node (a donor node accessed by the target parent node) through the target parent node. This increases a handover delay.

### SUMMARY

Embodiments of this application provide a communication method, apparatus, and system, to reduce a handover delay of an IAB node.

To achieve the foregoing objective, embodiments of this application provide the following technical solutions.

According to a first aspect, a communication method is provided. The communication method includes: An IAB node receives configuration information from a source donor node through a source parent node; and in a process in which the IAB node is handed over from the source parent node to a target parent node, the IAB node sends uplink data to a target donor node by using the configuration information through the target parent node. The configuration information includes: a routing configuration and/or a bearer mapping configuration, the configuration information is used by the IAB node to perform transmission of the uplink data with the target donor node through the target parent node, the source donor node is a donor node accessed by the source parent node, and the target donor node is a donor node accessed by the target parent node. According to the method provided in the first aspect, the source donor node sends the configuration information to the IAB node through a source node, so that the IAB node can obtain the configuration information earlier, and send the uplink data to the target donor node through the target parent node as early as possible. This optimizes an information configuration procedure of the IAB node in a handover process, reduces a handover delay of the IAB node, and reduces data transmission interruption time of the IAB node in the handover process.

In a possible implementation, the configuration information further includes indication information, the indication information is used to indicate to suspend the routing configuration and/or the bearer mapping configuration in the configuration information, and the method further includes: The IAB node suspends the routing configuration and/or the bearer mapping configuration in the configuration information based on the indication information. In this possible implementation, the configuration information may not affect transmission of the uplink data performed by the IAB node with the source donor node through the source node.

In a possible implementation, after the IAB node establishes an RRC connection to the target donor node through the target parent node, the method further includes: The IAB node makes the routing configuration and/or the bearer mapping configuration in the configuration information take effect. In this possible implementation, it can be ensured that the IAB node can normally send the uplink data to the target donor node through the target parent node.

In a possible implementation, the method further includes: The IAB node releases or suspends the routing configuration and the bearer mapping configuration between the IAB node and the source parent node. In this possible implementation, the routing configuration and the bearer mapping configuration between the IAB node and the source parent node may not affect current uplink transmission.

In a possible implementation, the source donor node and the target donor node are a same node; or the source donor node and the target donor node are different nodes. In this possible implementation, this application can be applied to a plurality of communication scenarios.

In a possible implementation, the routing configuration in the configuration information includes an uplink BAP routing identifier, the uplink BAP routing identifier is used to identify an uplink path, and the uplink path includes the target parent node and the target donor node.

In a possible implementation, the bearer mapping configuration in the configuration information includes an uplink backhaul RLC channel identifier.

In a possible implementation, the configuration information is carried in an RRC message or an F1AP message.

According to a second aspect, a communication method is provided. The communication method includes: A source donor node receives a measurement report from an IAB node, and determines, based on the measurement report, to hand over the IAB node from a source parent node to a target parent node; and the source donor node sends configuration information to the IAB node through the source parent node. The configuration information includes: a routing configuration and/or a bearer mapping configuration, the configuration information is used by the IAB node to perform transmission of uplink data with a target donor node through the target parent node, the source donor node is a donor node accessed by the source parent node, and the target donor node is a donor node accessed by the target parent node. According to the method provided in the second aspect, the source donor node sends the configuration information to the IAB node through a source node, so that the IAB node can obtain the configuration information earlier, and send the uplink data to the target donor node through the target parent node as early as possible. This optimizes an information configuration procedure of the IAB node in a handover process, reduces a handover delay of the IAB node, and reduces data transmission interruption time of the IAB node in the handover process.

In a possible implementation, the configuration information further includes indication information, and the indication information is used to indicate to suspend the routing configuration and/or the bearer mapping configuration in the configuration information. In this possible implementation, the configuration information may not affect transmission of the uplink data performed by the IAB node with the source donor node through the source node.

In a possible implementation, the source donor node and the target donor node are a same node.

In a possible implementation, the source donor node and the target donor node are different nodes, and the method further includes: The source donor node receives the configuration information from the target donor node. In this possible implementation, a method for obtaining the configuration information when the source donor node and the target donor node are different nodes is provided.

In a possible implementation, the configuration information is carried in a handover response.

In a possible implementation, the routing configuration includes an uplink BAP routing identifier, the uplink BAP routing identifier is used to identify an uplink path, and the uplink path includes the target parent node and the target donor node.

In a possible implementation, the bearer mapping configuration includes an uplink backhaul RLC channel identifier.

In a possible implementation, the configuration information is carried in an RRC message or an F1AP message.

According to a third aspect, a communication method is provided. The communication method includes: A target donor node receives a handover request from a source donor node, where the handover request is used to request an IAB node to be handed over from a source parent node to a target parent node, the source donor node is a donor node accessed by the source parent node, and the target donor node is a donor node accessed by the target parent node; and the target donor node sends a handover response to the source donor node based on the handover request, where the handover response includes configuration information, the configuration information includes: a routing configuration and/or a bearer mapping configuration, and the configuration information is used by the IAB node to perform transmission of uplink data with the target donor node through the target parent node. According to the method provided in the third aspect, a method for obtaining the configuration information by the source donor node is provided.

In a possible implementation, the routing configuration includes an uplink BAP routing identifier, the uplink BAP routing identifier is used to identify an uplink path, and the uplink path includes the target parent node and the target donor node.

In a possible implementation, the bearer mapping configuration includes an uplink backhaul RLC channel identifier.

According to a fourth aspect, a communication apparatus is provided. The communication apparatus includes a communication unit and a processing unit, where the processing unit is configured to perform the following actions through the communication unit: receiving configuration information from a source donor node through a source parent node, where the configuration information includes: a routing configuration and/or a bearer mapping configuration, the configuration information is used by the communication apparatus to perform transmission of uplink data with a target donor node through a target parent node, the source donor node is a donor node accessed by the source parent node, and the target donor node is a donor node accessed by the target parent node; and in a process in which the communication apparatus is handed over from the source parent node to the target parent node, sending the uplink data to the target donor node by using the configuration information through the target parent node.

According to a fifth aspect, a communication apparatus is provided. The communication apparatus includes a communication unit and a processing unit, where the processing unit is configured to perform the following actions through the communication unit: receiving a measurement report from an IAB node, and determining, based on the measurement report, to hand over the IAB node from a source parent node to a target parent node, where the communication apparatus is a donor node accessed by the source parent node; and sending configuration information to the IAB node through the source parent node, where the configuration information includes: a routing configuration and/or a bearer mapping configuration, the configuration information is used by the IAB node to perform transmission of uplink data with a target donor node through the target parent node, and the target donor node is a donor node accessed by the target parent node.

According to a sixth aspect, a communication apparatus is provided. The communication apparatus includes a communication unit and a processing unit, where the processing unit is configured to perform the following actions through the communication unit: receiving a handover request from a source donor node, where the handover request is used to request an IAB node to be handed over from a source parent node to a target parent node, the source donor node is a donor node accessed by the source parent node, and the communication apparatus is a donor node accessed by the target parent node; and sending a handover response to the source donor node based on the handover request, where the handover response includes configuration information, the configuration information includes: a routing configuration and/or a bearer mapping configuration, and the configuration information is used by the IAB node to perform transmission of uplink data with the communication apparatus through the target parent node.

In a possible implementation, the routing configuration includes an uplink BAP routing identifier, the uplink BAP routing identifier is used to identify an uplink path, and the uplink path includes the target parent node and the communication apparatus.

In a possible implementation, the bearer mapping configuration includes an uplink backhaul RLC channel identifier.

According to a seventh aspect, a communication method is provided. The communication method includes: A second IAB node receives second configuration information from a source donor node through a source parent node, where the second IAB node is a downstream node of a first IAB node, the source parent node is a donor node accessed by the first IAB node before handover; and in a process in which the first IAB node is handed over from the source parent node to a target parent node, the second IAB node sends uplink data to a target donor node by using the second configuration information through the target parent node. The second configuration information includes: a routing configuration and/or a bearer mapping configuration, the second configuration information is used by the second IAB node to perform transmission of the uplink data with the target donor node through the target parent node, the target parent node is a node accessed by the first IAB node after handover, the source donor node is a donor node accessed by the source parent node, and the target donor node is a donor node accessed by the target parent node. According to the method provided in the seventh aspect, when the first IAB node is handed over, the second configuration information may be sent to the second IAB node, so that the second IAB node can send the uplink data to the target donor node by using the second configuration information, to avoid a problem that necessary uplink data or uplink signaling cannot be successfully transmitted because the routing configuration and/or the bearer mapping configuration between the second IAB node and the source donor node are/is still used to process the uplink data or the uplink signaling.

In a possible implementation, the second configuration information further includes second indication information, the second indication information is used to indicate to release or suspend the routing configuration and the bearer mapping configuration between the second IAB node and the source parent node, and the method further includes: The second IAB node releases or suspends the routing configuration and the bearer mapping configuration between the second IAB node and the source parent node based on the second indication information. In this possible implementation, the routing configuration and the bearer mapping configuration between the IAB node and the source parent node may not affect current uplink transmission.

In a possible implementation, the source donor node and the target donor node are a same node; or the source donor node and the target donor node are different nodes. In this possible implementation, this application can be applied to a plurality of communication scenarios.

In a possible implementation, the routing configuration in the second configuration information includes an uplink BAP routing identifier, the uplink BAP routing identifier is used to identify an uplink path, and the uplink path includes the target parent node and the target donor node.

In a possible implementation, the bearer mapping configuration in the second configuration information includes an uplink backhaul RLC channel identifier.

In a possible implementation, the second configuration information is carried in an RRC message or an F1AP message.

According to an eighth aspect, a communication method is provided. The communication method includes: A source donor node receives a measurement report from a first IAB node, and determines, based on the measurement report, to hand over the first IAB node from a source parent node to a target parent node; and the source donor node sends second configuration information to a second IAB node through the source parent node. The first IAB node is handed over from the source parent node to the target parent node, the second IAB node is a downstream node of the first IAB node, the second configuration information includes: a routing configuration and/or a bearer mapping configuration, the second configuration information is used by the second IAB node to perform transmission of uplink data with a target donor node through the target parent node, the source donor node is a donor node accessed by the source parent node, and the target donor node is a donor node accessed by the target parent node. According to the method provided in the eighth aspect, when the first IAB node is handed over, the second configuration information may be sent to the second IAB node, so that the second IAB node can send the uplink data to the target donor node by using the second configuration information, to avoid a problem that necessary uplink data or uplink signaling cannot be successfully transmitted because the routing configuration and/or the bearer mapping configuration between the second IAB node and the source donor node are/is still used to process the uplink data or the uplink signaling.

In a possible implementation, the second configuration information further includes second indication information, and the second indication information is used to indicate to release or suspend the routing configuration and the bearer mapping configuration between the second IAB node and the source parent node. In this possible implementation, the routing configuration and the bearer mapping configuration between the IAB node and the source parent node may not affect current uplink transmission.

In a possible implementation, the source donor node and the target donor node are a same node.

In a possible implementation, the source donor node and the target donor node are different nodes, and the method further includes: The source donor node receives the second configuration information from the target donor node.

In a possible implementation, the second configuration information is carried in a handover response.

In a possible implementation, the routing configuration includes an uplink BAP routing identifier, the uplink BAP routing identifier is used to identify an uplink path, and the uplink path includes the target parent node and the target donor node.

In a possible implementation, the bearer mapping configuration includes an uplink backhaul RLC channel identifier.

In a possible implementation, the second configuration information is carried in an RRC message or an F1AP message.

According to a ninth aspect, a communication method is provided. The communication method includes: A target donor node receives a handover request from a source donor node, where the handover request is used to request a second IAB node to be handed over from a source parent node to a target parent node with a first IAB node, the source donor node is a donor node accessed by the source parent node, and the target donor node is a donor node accessed by the target parent node; and the target donor node sends a handover response to the source donor node based on the handover request, where the handover response includes second configuration information, the second configuration information includes: a routing configuration and/or a bearer mapping configuration, the second configuration information is used by the second IAB node to perform transmission of uplink data with the target donor node through the target parent node, and the second IAB node is a downstream node of the first IAB node. According to the method provided in the ninth aspect, a method for obtaining the second configuration information by the source donor node is provided.

In a possible implementation, the routing configuration includes an uplink BAP routing identifier, the uplink BAP routing identifier is used to identify an uplink path, and the uplink path includes the target parent node and the target donor node.

In a possible implementation, the bearer mapping configuration includes an uplink backhaul RLC channel identifier.

According to a tenth aspect, a communication apparatus is provided. The communication apparatus includes a communication unit and a processing unit, where the processing unit is configured to perform the following actions through the communication unit: receiving second configuration information from a source donor node through a source parent node; and in a process in which a first IAB node is handed over from the source parent node to a target parent node, sending uplink data to a target donor node by using the second configuration information through the target parent node. The communication apparatus is a downstream node of the first IAB node, the source parent node is a donor node accessed by the first IAB node before handover, the second configuration information includes: a routing configuration and/or a bearer mapping configuration, the second configuration information is used by the communication apparatus to perform transmission of the uplink data with the target donor node through the target parent node, the target parent node is a node accessed by the first IAB node after handover, the source donor node is a donor node accessed by the source parent node, and the target donor node is a donor node accessed by the target parent node.

In a possible implementation, the second configuration information further includes second indication information, the second indication information is used to indicate to release or suspend the routing configuration and the bearer mapping configuration between the communication apparatus and the source parent node, and the processing unit is further configured to release or suspend the routing configuration and the bearer mapping configuration between the communication apparatus and the source parent node based on the second indication information.

In a possible implementation, the source donor node and the target donor node are a same node; or the source donor node and the target donor node are different nodes.

In a possible implementation, the routing configuration in the second configuration information includes an uplink BAP routing identifier, the uplink BAP routing identifier is used to identify an uplink path, and the uplink path includes the target parent node and the target donor node.

In a possible implementation, the bearer mapping configuration in the second configuration information includes an uplink backhaul RLC channel identifier.

In a possible implementation, the second configuration information is carried in an RRC message or an F1AP message.

According to an eleventh aspect, a communication apparatus is provided. The communication apparatus includes a communication unit and a processing unit, where the communication unit is configured to receive a measurement report from a first IAB node, the processing unit is configured to determine, based on the measurement report, to hand over the first IAB node from a source parent node to a target parent node, and the communication unit is further configured to send second configuration information to a second IAB node through the source parent node. The first IAB node is handed over from the source parent node to the target parent node, the second IAB node is a downstream node of the first IAB node, the communication apparatus is a donor node accessed by the source parent node, a target donor node is a donor node accessed by the target parent node, the second configuration information includes: a routing configuration and/or a bearer mapping configuration, and the second configuration information is used by the second IAB node to perform transmission of uplink data with the target donor node through the target parent node.

In a possible implementation, the second configuration information further includes second indication information, and the second indication information is used to indicate to release or suspend the routing configuration and the bearer mapping configuration between the second IAB node and the source parent node.

In a possible implementation, the communication apparatus and the target donor node are a same node.

In a possible implementation, the communication apparatus and the target donor node are different nodes, and the communication unit is further configured to receive the second configuration information from the target donor node.

In a possible implementation, the second configuration information is carried in a handover response.

In a possible implementation, the routing configuration includes an uplink BAP routing identifier, the uplink BAP routing identifier is used to identify an uplink path, and the uplink path includes the target parent node and the target donor node.

In a possible implementation, the bearer mapping configuration includes an uplink backhaul RLC channel identifier.

In a possible implementation, the second configuration information is carried in an RRC message or an F1AP message.

According to a twelfth aspect, a communication apparatus is provided. The communication apparatus includes a communication unit and a processing unit, where the processing unit is configured to perform the following actions through the communication unit: receiving a handover request from a source donor node, and sending a handover response to the source donor node based on the handover request. The handover request is used to request a second IAB node to be handed over from a source parent node to a target parent node with a first IAB node, the source donor node is a donor node accessed by the source parent node, the communication apparatus is a donor node accessed by the target parent node, the handover response includes second configuration information, the second configuration information includes: a routing configuration and/or a bearer mapping configuration, the second configuration information is used by the second IAB node to perform transmission of uplink data with the communication apparatus through the target parent node, and the second IAB node is a downstream node of the first IAB node.

In a possible implementation, the routing configuration includes an uplink BAP routing identifier, the uplink BAP routing identifier is used to identify an uplink path, and the uplink path includes the target parent node and the communication apparatus.

In a possible implementation, the bearer mapping configuration includes an uplink backhaul RLC channel identifier.

According to a thirteenth aspect, a communication apparatus is provided. The communication apparatus includes a processor. The processor is connected to a memory, the memory is configured to store computer-executable instructions, and the processor executes the computer-executable instructions stored in the memory, to implement any method provided in any one of the first aspect to the third aspect and any one of the seventh aspect to the ninth aspect. The memory and the processor may be integrated together, or may be independent components. If the memory and the processor are independent components, the memory may be located inside the communication apparatus, or may be located outside the communication apparatus.

In a possible implementation, the processor includes a logic circuit and an input interface and/or an output interface. The output interface is configured to perform a sending action in a corresponding method, and the input interface is configured to perform a receiving action in the corresponding method.

In a possible implementation, the communication apparatus further includes a communication interface and a communication bus. The processor, the memory, and the communication interface are connected through the communication bus. The communication interface is configured to perform receiving and sending actions in the corresponding method. The communication interface may also be referred to as a transceiver. Optionally, the communication interface includes a transmitter or a receiver. In this case, the transmitter is configured to perform the sending action in the corresponding method, and the receiver is configured to perform the receiving action in the corresponding method.

In a possible implementation, the communication apparatus exists in a product form of a chip.

According to a fourteenth aspect, a computer-readable storage medium is provided. The computer-readable storage medium includes instructions. When the instructions are run on a computer, the computer is enabled to perform any method provided in any one of the first aspect to the third aspect and any one of the seventh aspect to the ninth aspect.

According to a fifteenth aspect, a computer program product including instructions is provided. When the instructions are run on a computer, the computer is enabled to perform any method provided in any one of the first aspect to the third aspect and any one of the seventh aspect to the ninth aspect.

According to a sixteenth aspect, a chip is provided. The chip includes a processor and an interface, and the processor is coupled to a memory through the interface. When the processor executes a computer program or instructions in the memory, any method provided in any one of the first aspect to the third aspect and any one of the seventh aspect to the ninth aspect is performed.

According to a seventeenth aspect, a communication system is provided. The communication system includes one or more of the communication apparatuses provided in the fourth aspect to the sixth aspect. Optionally, the communication system further includes one or more of the communication apparatuses provided in the tenth aspect to the twelfth aspect.

For technical effects brought by any implementation in the fourth aspect to the seventeenth aspect, refer to technical effects brought by a corresponding implementation in the first aspect to the third aspect and the seventh aspect to the ninth aspect. Details are not described herein again.

It should be noted that various possible implementations in any one of the foregoing aspects may be combined on a premise that the solutions are not contradictory.

### BRIEF DESCRIPTION OF DRAWINGS

FIG. 1 is a schematic diagram of an IAB networking scenario;
FIG. 2 is a schematic architectural diagram of a mobile communication system according to an embodiment of this application;
FIG. 3 is a schematic diagram of nodes on a transmission path according to an embodiment of this application;
FIG. 4 is a schematic architectural diagram of a protocol stack according to an embodiment of this application;
FIG. 5 is a schematic architectural diagram of another protocol stack according to an embodiment of this application;
FIG. 6 is a schematic architectural diagram of still another protocol stack according to an embodiment of this application;
FIG. 7 is a schematic diagram of an IAB node handover scenario;
FIG. 8 is a schematic diagram of an IAB node handover procedure;
FIG. 9 is a schematic diagram of another IAB node handover procedure;
FIG. 10 is a flowchart of a communication method according to an embodiment of this application;
FIG. 11 is a flowchart of another communication method according to an embodiment of this application;
FIG. 12 is a schematic diagram of a plurality of IAB node handover scenarios according to an embodiment of this application;
FIG. 13 is a schematic diagram of a plurality of IAB node handover scenarios according to an embodiment of this application;
FIG. 14 is a flowchart of still another communication method according to an embodiment of this application;
FIG. 15 is a schematic diagram of a plurality of IAB node handover scenarios according to an embodiment of this application;
FIG. 16 is a schematic diagram of a plurality of IAB node handover scenarios according to an embodiment of this application;
FIG. 17 is a schematic composition diagram of a communication apparatus according to an embodiment of this application;
FIG. 18 is a schematic composition diagram of another communication apparatus according to an embodiment of this application;
FIG. 19 is a schematic diagram of a hardware structure of a communication apparatus according to an embodiment of this application;
FIG. 20 is a schematic diagram of a hardware structure of another communication apparatus according to an embodiment of this application; and
FIG. 21 is a flowchart of yet another communication method according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" means "or". For example, A/B may represent A or B. The term "and/or" in this specification describes only an association relationship between associated objects and represents that there may be three relationships. For example, A and/or B may represent the following three cases: Only A exists, both A and B exist, and only B exists. In addition, in the descriptions of this application, unless otherwise specified, "a plurality of" means two or more than two.

A communication system to which a method provided in embodiments of this application is applicable includes but is not limited to a 4G system, a long term evolution (long term evolution, LTE) system, a 5G system, a new radio (new radio, NR) system, a wireless local area network (wireless local area network, WLAN) system, a future evolved system, or a plurality of converged communication systems. The 5G system may be a non-standalone (non-standalone, NSA) 5G system or a standalone (standalone, SA) 5G system.

FIG. 2 is a schematic architectural diagram of a mobile communication system to which an embodiment of this application is applied. As shown in FIG. 2, the mobile communication system includes a core network device, a radio access network device, a wireless backhaul device, and at least one terminal (for example, a terminal 1 and a terminal 2 in FIG. 2). The terminal is connected to the wireless backhaul device in a wireless manner, and is connected to the radio access network device through one or more wireless backhaul devices (only one is shown for convenience in FIG. 2) (A part of terminals may also be directly connected to the radio access network device in a wireless manner). The radio access network device is connected to the core network device in a wireless or wired manner. The core network device and the radio access network device may be independent and different physical devices, or a function of the core network device and a logical function of the radio access network device may be integrated into a same physical device, or a part of functions of the core network device and a part of functions of the radio access network device may be integrated into one physical device. The terminal and the wireless backhaul device may be at a fixed location or may be mobile. Quantities of core network devices, radio access network devices, wireless backhaul devices, and terminals included in the mobile communication system are not limited in embodiments of this application.

The radio access network device, the wireless backhaul device, and the terminal device may be deployed on the land, including an indoor device, an outdoor device, a handheld device, or a device-mounted device; may be deployed on the water; or may be deployed on an airplane, a balloon, and a satellite in the air. Application scenarios of the radio access network device, the wireless backhaul device, and the terminal are not limited in embodiments of this application.

A radio link between devices in FIG. 2 may communicate with each other by using a licensed spectrum (licensed spectrum), may communicate with each other by using an unlicensed spectrum (unlicensed spectrum), or may communicate with each other by using both a licensed spectrum and an unlicensed spectrum. A radio link between devices may perform communication by using a spectrum below 6 gigahertz (gigahertz, GHz), may perform communication by using a spectrum above 6 GHz, or may perform communication by using both a spectrum below 6 GHz and a spectrum above 6 GHz. A spectrum resource used by the radio link is not limited in embodiments of this application.

The terminal may also be referred to as a terminal device, user equipment (user equipment, UE), a mobile station (mobile station, MS), a mobile terminal (mobile terminal, MT), or the like. The terminal may be a mobile phone (mobile phone), a tablet computer (Pad), a computer having a wireless transceiver function, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The wireless backhaul device may provide a wireless access service and a wireless backhaul service for a child node (for example, a terminal or another wireless backhaul device) of the wireless backhaul device. The wireless backhaul service refers to a data and/or signaling backhaul service provided through a BL. Specifically, the wireless backhaul device may be a relay node (relay node, RN) in an LTE system, an IAB node in a 5G system, or another device that can provide a wireless relay function. In this application, an example in which the wireless backhaul device is an IAB node is used below for description. For example, the IAB node may be a device such as customer premises equipment (customer premises equipment, CPE) or a home gateway (residential gateway, RG). In this case, the method provided in embodiments of this application may further be applied to a home access (home access) scenario.

The radio access network device is an access device through which the terminal or the wireless backhaul device accesses the mobile communication system in a wireless manner, and may be an evolved NodeB (evolved NodeB, eNB or eNodeB), a next generation NodeB (next generation node base station, gNB), a base station in a future mobile communication system, an access node in a wireless fidelity (Wireless-Fidelity, Wi-Fi) system, or the like. A specific technology and a specific device form that are used by the radio access network device are not limited in embodiments of this application. In the mobile communication system shown in FIG. 2, the radio access network device may also be referred to as a donor node. For example, the donor node may be a donor base station. The donor node may be an IAB donor (IAB donor) or a DgNB (namely, a donor gNodeB) for short in a 5G network. The donor node may be a complete entity, or may be a form in which a centralized unit (centralized unit, CU) (Donor-CU for short in this specification, or CU for short, namely, a donor CU) and a distributed unit (distributed unit, DU) (Donor-DU for short in this specification, namely, a donor DU) are separated. In other words, the donor node includes the donor CU and the donor DU.

Alternatively, the donor CU may be in a form in which a user plane (User plane, UP) (CU-UP for short in this specification) and a control plane (Control plane, CP) (CU-CP for short in this specification) are separated. In other words, the donor CU includes one CU-CP and one or more CU-UPs.

In embodiments of this application, the IAB node is connected to a core network through the donor node. For example, in a 5G standalone architecture, an IAB node is connected to a core network (5G core, 5GC) of a 5G network through a donor node. In a 5G non-standalone architecture, an IAB node is connected to an evolved packet core (evolved packet core, EPC) through an eNB on a control plane, and is connected to the EPC through a donor node and the eNB on a user plane.

To ensure service transmission reliability, in an IAB network, multi-hop IAB node networking and multi-connectivity IAB node networking are supported. Therefore, there may be a plurality of transmission paths between the terminal and the donor node. On one path, there is a determined hierarchical relationship between IAB nodes, and between an IAB node and a donor node serving the IAB node. Each IAB node considers, as a parent node, an adjacent node providing a backhaul service for the IAB node. Correspondingly, each IAB node may be considered as a child node of the parent node of the IAB node.

For example, refer to FIG. 1. A parent node of an IAB node 1 is a donor node, the IAB node 1 is a parent node of an IAB node 2 and an IAB node 3, both the IAB node 2 and the IAB node 3 are parent nodes of an IAB node 4, and a parent node of an IAB node 5 is the IAB node 3. An uplink data packet of a terminal may be transmitted to the donor node through one or more IAB nodes, and then is sent by the donor node to a mobile gateway device (for example, a user plane function (user plane function, UPF) network element in a 5G network). After the donor node receives a downlink data packet from the mobile gateway device, the donor node sends the downlink data packet to the terminal through the one or more IAB nodes. There are two available paths for data packet transmission between the terminal 1 and the donor node: the terminal 1→the IAB node 4→the IAB node 3→the IAB node 1→the donor node, and the terminal 1→the IAB node 4→the IAB node 2→the IAB node 1→the donor node. There are three available paths for data packet transmission between the terminal 2 and the donor node: the terminal 2-the IAB node 4→the IAB node 3→the IAB node 1→the donor node, the terminal 2→the IAB node 4→the IAB node 2→the IAB node 1—>the donor node, and the terminal 2-the IAB node 5→the IAB node 2→the IAB node 1→the donor node.

It may be understood that, in the IAB network, one transmission path between the terminal and the donor node may include one or more IAB nodes. Each IAB node needs to maintain a BL oriented to a parent node, and further needs to maintain a radio link with a child node. If one IAB node is a node accessed by the terminal, an AL exists between the IAB node and a child node (namely, the terminal). If one IAB node is a node that provides a backhaul service for another IAB node, a BL exists between the IAB node and a child node (namely, the another IAB node). For example, refer to FIG. 1. On the path "the terminal 1→the IAB node 4→the IAB node 3→the IAB node 1→the donor node", the terminal 1 accesses the IAB node 4 through the AL, the IAB node 4 accesses the IAB node 3 through the BL, the IAB node 3 accesses the IAB node 1 through the BL, and the IAB node 1 accesses the donor node through the BL.

The foregoing IAB networking scenario is merely an example. In an IAB scenario with multi-hop and multi-connectivity combined, there are more other possible IAB networking scenarios. For example, a donor node and an IAB node connected to another donor node form dual connectivity to serve a terminal. The possible IAB networking scenarios are not listed one by one herein.

To make embodiments of this application more clearly, the following collectively describes some content and concepts related to embodiments of this application.

### 1. Components of an IAB node

The IAB node may play a role of a mobile terminal (mobile terminal, MT) and a role of a DU. When the IAB node communicates with a parent node of the IAB node, the IAB node may be considered as a terminal. In this case, the IAB node serves as an MT. When the IAB node communicates with a child node of the IAB node (where the child node may be a terminal or a terminal part of another IAB node), the IAB node may be considered as a network device. In this case, the IAB node serves as a DU. Therefore, it may be considered that the IAB node includes an MT part and a DU part. An IAB node may establish a backhaul connection to at least one parent node of the IAB node through the MT part. A DU part of an IAB node may provide an access service for a terminal or an MT part of another IAB node.

For example, refer to FIG. 3. A terminal is connected to a donor node through an IAB node 2 and an IAB node 1. The IAB node 1 and the IAB node 2 each include a DU part and an MT part. The DU part of the IAB node 2 provides an access service for the terminal. The DU part of the IAB node 1 provides an access service for the MT part of the IAB node 2. A donor DU provides an access service for the MT part of the IAB node 1.

The MT part of the IAB node may be referred to as an IAB-MT, and the DU part of the IAB node may be referred to as an IAB-DU. For example, the MT part of the IAB node 1 may be referred to as an IAB 1-MT, and the DU part of the IAB node 1 may be referred to as an IAB1-DU.

### 2. Backhaul adaptation protocol (backhaul adaptation protocol, BAP) layer

The BAP layer is a protocol layer newly introduced in the IAB network, is located above a radio link control (radio link control, RLC) layer, and may be configured to implement functions such as routing of a data packet on the BL and bearer mapping. The bearer mapping in embodiments of this application may also be referred to as QoS mapping. The bearer mapping is used to select an RLC channel for sending a data packet.

The BAP layer has at least one of the following capabilities: adding routing information (Routing info) that can be identified by the IAB node to the data packet, performing route selection based on the routing information that can be identified by the IAB node, and performing quality of service (quality of service, QoS) mapping on a plurality of links including the IAB node for the data packet. It should be noted that a name of a protocol layer having these capabilities is not necessarily a BAP layer. A person skilled in the art may understand that any protocol layer having these capabilities may be understood as the BAP layer in embodiments of this application.

The routing information that can be identified by the IAB node may be one or more types of information such as an identifier of a terminal, an identifier of an IAB node accessed by the terminal, an identifier of a complete donor node, an identifier of a donor DU, an identifier of a donor CU, and an identifier of a transmission path. For transmission of uplink data, the routing information that can be identified by the IAB node may be one or more types of information such as the identifier of the complete donor node, the identifier of the donor DU, the identifier of the donor CU, and the identifier of the transmission path. For downlink data transmission, the routing information that can be identified by the IAB node may be one or more types of information such as the identifier of the terminal, the identifier of the IAB node accessed by the terminal, and the identifier of the transmission path.

The QoS mapping on the plurality of links may be: mapping, from an RB (radio bearer, RB) of the terminal to an RLC bearer, an RLC channel, or a logical channel on the BL, performed on the BL based on an identifier that is of the radio bearer (radio bearer, RB) of the terminal and that is carried in the data packet; or mapping, from an RB, an RLC bearer, an RLC channel, or a logical channel of an ingress link to an RB, an RLC bearer, an RLC channel, or a logical channel of an egress link, performed based on a correspondence between any two or more of the RB, the RLC bearer, the RLC channel, and the logical channel of the ingress link (namely, a link for receiving the data packet) and the egress link (namely, a link for sending the data packet).

### 3. F1 application protocol (F1 application protocol, F1AP) layer

The F1AP layer is used to carry a control plane message between the DU (the IAB-DU or the donor DU) and the donor CU. The control plane message includes one or more of the following messages: a message related to management of an interface between the DU and the CU, a message related to configuration update between the DU and the CU, a context configuration message related to a child node (including a terminal, another IAB node, and the like) of the DU, a message including a message container (message container) that carries an RRC message of the child node of the DU, and the like.

### 4. F1 interface

The F1 interface is a logical interface between the IAB node (for example, the IAB-DU) and the donor node (or the donor CU or the donor DU). The F1 interface may also be referred to as an F1^{∗} interface or may have another name. The F1 interface supports a user plane (F1-U/F1*-U) protocol and a control plane (F1-C/F1*-C) protocol. The user plane protocol includes one or more of the following protocol layers: a general packet radio service tunneling protocol user plane (general packet radio service tunneling protocol user plane, GTP-U) layer, a user datagram protocol (user datagram protocol, UDP) layer, an internet protocol (internet protocol, IP) layer, and the like. The control plane protocol includes one or more of the following protocol layers: an F1AP layer, a stream control transmission protocol (stream control transmission protocol, SCTP) layer, an IP layer, and the like.

### 5. Protocol stack architecture of the IAB node, the donor DU, and the donor CU

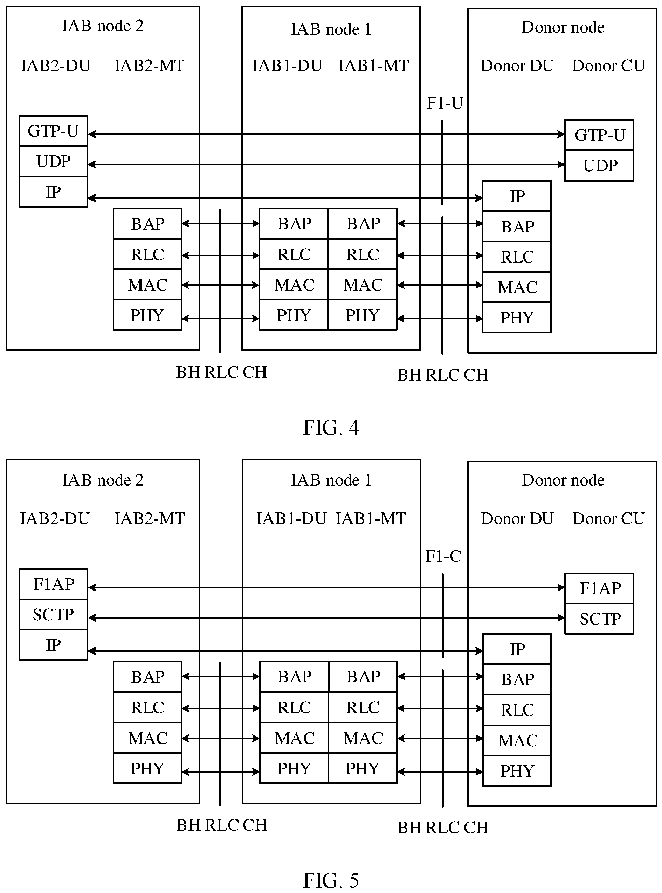

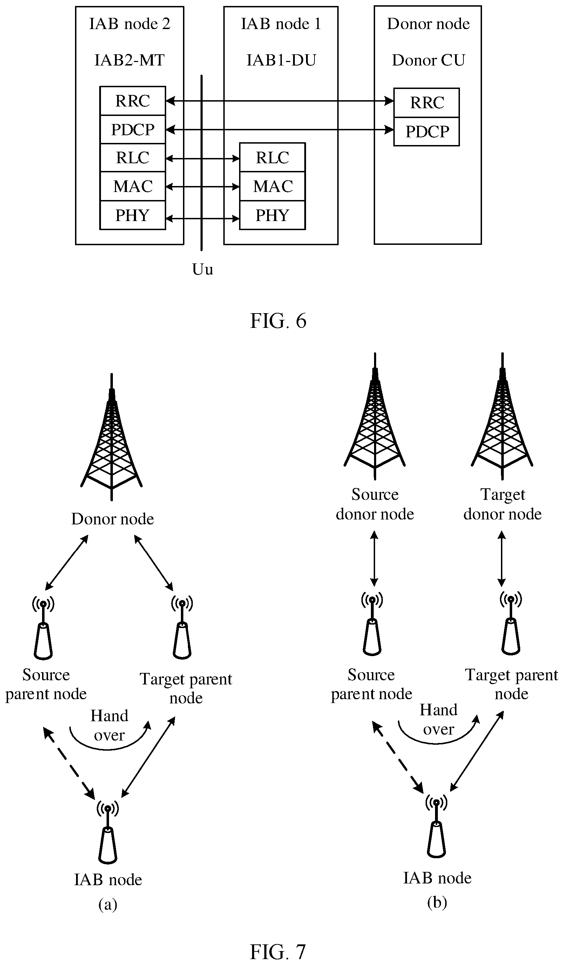

For example, FIG. 4 shows a protocol stack used to support an F1-U (or F1^{∗}-U) protocol. FIG. 5 shows a protocol stack used to support an F1-C (or F1^{∗}-C) protocol. FIG. 6 shows a protocol stack used to support an RRC connection of the IAB-MT.

An F1 interface needs to be established between the IAB node (specifically, the IAB-DU) and the donor node (or the donor CU). A control plane of the F1 interface is used, so that interface management, IAB-DU management, terminal context related configuration, and the like may be performed between the IAB node and the donor node. A user plane of the F1 interface is used, so that functions such as user plane data transmission and downlink transmission status feedback may be performed between the IAB node and the donor node.

In FIG. 4 to FIG. 6, a PDCP refers to a packet data convergence protocol (packet data convergence protocol) layer, MAC refers to a medium access control (medium access control) layer, a PHY refers to a physical (physical) layer, and an L2 layer (layer 2) is a link layer. For example, the L2 layer may be a data link layer in an open systems interconnection (open systems interconnection, OSI) reference model. An L1 layer (layer 1) may be a physical layer. For example, the L1 layer may be a physical layer in the OSI reference model.

Protocol stack architectures of nodes in an IAB network shown in FIG. 4 to FIG. 6 in embodiments of this application are merely examples. The method provided in embodiments of this application does not depend on the examples, but makes, by using the examples, the method provided in embodiments of this application easier to understand.

### 6. Upper protocol layer and lower protocol layer

In embodiments of this application, a location relationship between protocol layers is defined as follows: In a process in which a node sends data, a protocol layer that first processes a data packet is above a protocol layer that processes the data packet later; in other words, the protocol layer that processes the data packet first may be considered as an upper-layer protocol layer of the protocol layer that processes the data packet later. In a process in which a node receives data, a protocol layer that first processes a data packet is below a protocol layer that processes the data packet later; in other words, the protocol layer that first processes the data packet may be considered as a lower protocol layer of the protocol layer that processes the data packet later.

For example, refer to FIG. 4. In a protocol stack of the IAB node 2, a BAP layer is an upper protocol layer of an RLC layer, a MAC layer, and a PHY layer, and the RLC layer, the MAC layer, and the PHY layer are lower protocol layers of the BAP layer.

### 7. Backhaul RLC channel (backhaul RLC channel, BH RLC CH)

In embodiments of this application, the BH RLC CH is an RLC CH between two nodes (for example, between two IAB nodes or between an IAB node and a donor node), and is used to transmit a backhauled data packet between the two nodes.

The foregoing briefly describes some content and concepts in this application.

In an IAB node handover scenario, a target parent node and a source parent node may access a same donor node (refer to (a) in FIG. 7), or may access different donor nodes (refer to (b) in FIG. 7). The following briefly describes an IAB node handover process and a problem existing in the IAB node handover process by using a scenario in which a target parent node and a source parent node access a same donor node (denoted as a scenario 1) and a scenario in which a target parent node and a source parent node access different donor nodes (denoted as a scenario 2).

In the scenario 1, the target parent node and the source parent node access a same donor node.

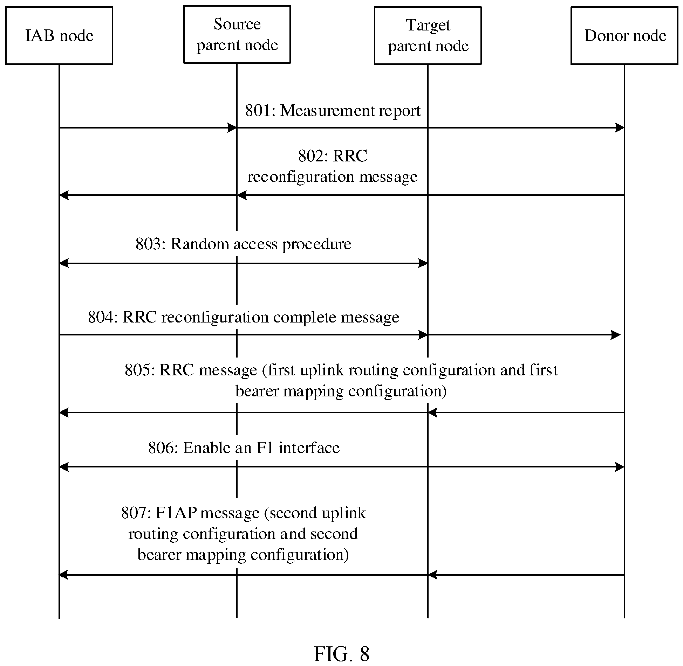

Refer to FIG. 8. A possible IAB node handover process in the scenario 1 includes the following steps.

801: An IAB node (or an IAB-MT) sends a measurement report (Measurement Report) to the donor node through the source parent node.

The measurement report is used to report a signal quality measurement result of a neighboring cell. The measurement report may be carried in an RRC message. When being transmitted between the source parent node and the donor node, the RRC message may be encapsulated in an F1AP message between the source parent node and the donor node.

802: The donor node sends an RRC reconfiguration message to the IAB node (or the IAB-MT) through the source parent node.

If the donor node determines, based on the measurement report, the target parent node to which the IAB node (or the IAB-MT) is to be handed over, the donor node sends the RRC reconfiguration message to the IAB node (or the IAB-MT). The RRC reconfiguration message includes some configurations (for example, a time-frequency resource and a pilot) required when the IAB node (or the IAB-MT) performs a random access procedure with the target parent node.

For a process in which the donor node determines, based on the measurement report, whether an IAB node (or an IAB-MT) needs to be handed over and a target parent node to which the IAB node is to be handed over, refer to a conventional technology. Details are not described herein.

When the RRC reconfiguration message is transmitted between the source parent node and the donor node, the RRC reconfiguration message may be encapsulated in an F1AP message between the source parent node and the donor node.

803: The random access procedure is performed between the IAB node (or the IAB-MT) and the target parent node.

Through step 803, the IAB node (or the IAB-MT) may establish an RRC connection to the donor node through the target parent node.

804: The IAB node (or the IAB-MT) sends an RRC reconfiguration complete message to the donor node through the target parent node.

The RRC reconfiguration complete message is used to indicate, to the donor node, that establishment of the RRC connection is complete.

When the RRC reconfiguration complete message is transmitted between the target parent node and the donor node, the RRC reconfiguration complete message may be encapsulated in an F1AP message between the target parent node and the donor node.

805: The donor node sends an RRC message to the IAB node (or the IAB-MT) through the target parent node, where the RRC message includes a first uplink routing configuration and a first bearer mapping configuration.

The first uplink routing configuration may include a default (default) uplink (LTL) BAP routing identifier (routing ID).

The first bearer mapping configuration may include a default UL BH RLC CH identifier.

It should be noted that, in this case, because an F1 interface between the IAB node (or an IAB-DU) and the donor node is not enabled, the first uplink routing configuration and the first bearer mapping configuration cannot be configured for the IAB node by using the F1AP message, and can be configured only by using the RRC message.

806: The IAB node (or the IAB-DU) enables the F1 interface between the IAB node (or the IAB-DU) and the donor node.

It should be noted that, because the donor node accessed by the IAB node does not change before and after handover, the F1 interface exists on the IAB node (or the IAB-DU). Therefore, the F1 interface does not need to be reestablished between the IAB node (or the IAB-DU) and the donor node. If an IP address of the IAB node (or the IAB-DU) changes before and after handover, only IP addresses, transport network layer addresses, or the like of corresponding F1-C/F1^{∗}-C and F1-U/F1^{∗}-U connections need to be updated. If an IP address of the IAB node (or the IAB-DU) does not change before and after handover, step 806 may not be performed.

807: The donor node configures a second uplink routing configuration and a second bearer mapping configuration for the IAB node by using the F1AP message.

After step 807, the IAB node (or the IAB-MT) may send uplink data to the donor node by using the second uplink routing configuration and the second bearer mapping configuration through the target parent node.

A difference between the first uplink routing configuration and the first bearer mapping configuration and the second uplink routing configuration and the second bearer mapping configuration lies in that: The first uplink routing configuration and the first bearer mapping configuration are used in a phase in which the connection between the IAB node and the donor node is established or a bootstrapping (bootstrapping) phase, while the second uplink routing configuration and the second bearer mapping configuration are used after establishment of the connection between the IAB node and the donor node is complete or after bootstrapping is complete. In addition, the first uplink routing configuration and the first bearer mapping configuration are used to transmit only F1-C/F1^{∗}-C related data, while the second uplink routing configuration and the second bearer mapping configuration may be used to transmit F1-C/F1^{∗}-C related data, F1-U/F1^{∗}-U data, non-F 1 interface data, and the like, for example, operation, administration, and maintenance (Operation, Administration, and Maintenance, OAM) related data. In addition, only one default UL BAP routing ID and one default UL BH RLC CH identifier are configured in the first uplink routing configuration and the first bearer mapping configuration, while one or more UL BAP routing IDs and one or more UL BH RLC CH identifiers may be configured in the second uplink routing configuration and the second bearer mapping configuration, to distinguish, at a finer granularity, between data routing with different QoS requirements and between bearer mapping with different QoS requirements.

Alternatively, the first uplink routing configuration in this embodiment of this application may have another name, for example, a default uplink routing configuration or a default BAP configuration. This is not limited in this application. Alternatively, the first bearer mapping configuration in this application may have another name, for example, a default bearer mapping configuration. This is not limited in this application.

In the scenario 2, the target parent node and the source parent node access different donor nodes.

In the scenario 2, a donor node accessed by the source parent node is referred to as a source donor node, and a donor node accessed by the target parent node is referred to as a target donor node.

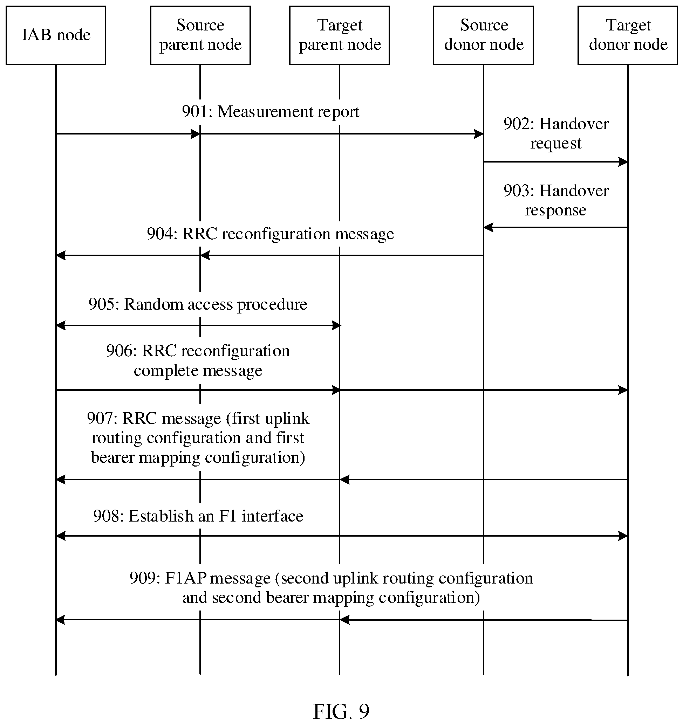

Refer to FIG. 9. A possible IAB node handover process in the scenario 2 includes the following steps.

901: An IAB node (or an IAB-MT) sends a measurement report to the source donor node through the source parent node.

The measurement report is used to report a signal quality measurement result of a neighboring cell. The measurement report may be carried in an RRC message. When being transmitted between the source parent node and the source donor node, the RRC message may be encapsulated in an F1AP message between the source parent node and the source donor node.

902: The source donor node sends a handover request to the target donor node.

If the source donor node determines, based on the measurement report, the target parent node to which the IAB node (or the IAB-MT) is to be handed over, the source donor node sends the handover request to the target donor node. The handover request is used to request the IAB node (or the IAB-MT) to be handed over from the source parent node to the target parent node.

903: The target donor node sends a handover response to the source donor node.

The handover response may include some or all content in an RRC reconfiguration message sent by the source donor node to the IAB node (or the IAB-MT), for example, some configurations required when the IAB node (or the IAB-MT) performs a random access procedure with the target parent node.

904: The source donor node sends the RRC reconfiguration message to the IAB node (or the IAB-MT) through the source parent node.

The RRC reconfiguration message includes the some configurations required when the IAB node (or the IAB-MT) performs the random access procedure with the target parent node.

When the RRC reconfiguration message is transmitted between the source parent node and the source donor node, the RRC reconfiguration message may be encapsulated in an F1AP message between the source parent node and the source donor node.

905: The random access procedure is performed between the IAB node (or the IAB-MT) and the target parent node.

Through step 905, the IAB node (or the IAB-MT) may establish an RRC connection to the target donor node through the target parent node.

906: The IAB node (or the IAB-MT) sends an RRC reconfiguration complete message to the target donor node through the target parent node.

The RRC reconfiguration complete message is used to indicate, to the target donor node, that establishment of the RRC connection is complete.

When the RRC reconfiguration complete message is transmitted between the target parent node and the target donor node, the RRC reconfiguration complete message may be encapsulated in an F1AP message between the target parent node and the target donor node.

907: The target donor node sends an RRC message to the IAB node (or the IAB-MT) through the target parent node, where the RRC message includes a first uplink routing configuration and a first bearer mapping configuration.

Step 907 is similar to step 805. For understanding of step 907, refer to step 805. Details are not described again.

908: The IAB node (or the IAB-DU) establishes an F1 interface with the target donor node.

The F1 interface between the IAB node (or the IAB-DU) and the target donor node may be enabled by establishing the F1 interface.

909: The target donor node configures a second uplink routing configuration and a second bearer mapping configuration for the IAB node by using the F1AP message.

Step 909 is similar to step 807. For understanding of step 909, refer to step 807. Details are not described again.

Uplink data in this embodiment of this application includes uplink user plane data and/or uplink control plane data.

It should be noted that, when the second uplink routing configuration and the second bearer mapping configuration that are configured by using the F1AP message exist, the first uplink routing configuration and the first bearer mapping configuration that are configured by using the RRC message do not take effect.

In the foregoing scenario 1 and scenario 2, in the IAB node handover process, the IAB node (or the IAB-MT) can obtain the first uplink routing configuration and the first bearer mapping configuration by using RRC signaling between the IAB node (or the IAB-MT) and the target parent node only after establishing the RRC connection to the target donor node through the target parent node. This increases a handover delay.

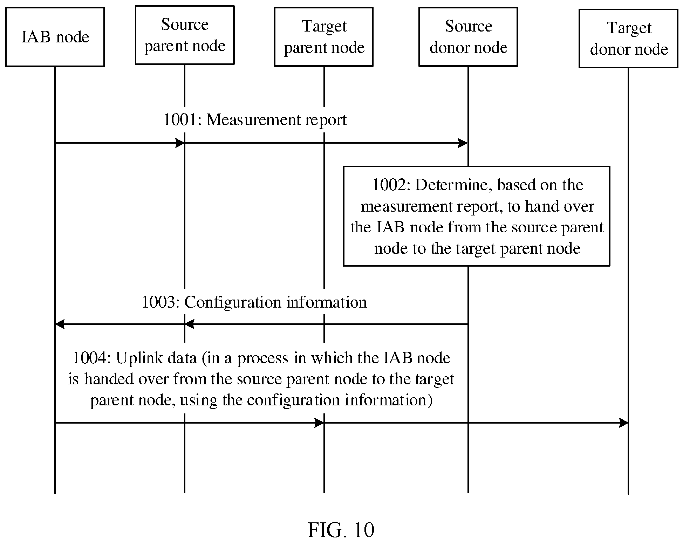

To reduce a handover delay of an IAB node, an embodiment of this application provides a communication method. As shown in FIG. 10, the method includes the following steps.

1001: An IAB node (or an IAB-MT) sends a measurement report to a source donor node through a source parent node. Correspondingly, the source donor node receives the measurement report from the IAB node (or the IAB-MT) through the source parent node.

The source donor node is a donor node accessed by the source parent node.

The measurement report is used to report a signal quality measurement result of a neighboring cell. The measurement report may be carried in an RRC message. When being transmitted between the source parent node and the source donor node, the RRC message may be encapsulated in an F1AP message between the source parent node and the source donor node.

1002: The source donor node determines, based on the measurement report, to hand over the IAB node (or the IAB-MT) from the source parent node to a target parent node.

For a specific implementation of step 1002, refer to the conventional technology. Details are not described in this application again.

1003: The source donor node sends configuration information to the IAB node through the source parent node. Correspondingly, the IAB node receives the configuration information from the source donor node through the source parent node.

Optionally, the configuration information includes: a routing configuration and/or a bearer mapping configuration, the configuration information is used by the IAB node (or the IAB-MT) to perform transmission of uplink data with a target donor node through the target parent node, and the target donor node is a donor node accessed by the target parent node.

Optionally, the source donor node and the target donor node are a same node; or the source donor node and the target donor node are different nodes. The source donor node may be a complete donor node, a donor CU, or a CU-CP, and the target donor node may be a complete donor node, a donor CU, or a CU-CP.

Optionally, the source parent node and the source donor node are a same node or different nodes.

Optionally, the target parent node and the target donor node are a same node or different nodes.

In one case, the routing configuration included in the configuration information includes one UL BAP routing ID. The UL BAP routing ID is used to identify an uplink path, and the uplink path includes the target parent node and the target donor node. The UL BAP routing ID includes a BAP address (BAP address) and a path identifier (path ID) of a target receiving node (namely, the target donor node) of the uplink data. The BAP address may include identification information. Optionally, the BAP address of the target receiving node of the uplink data may be a BAP address of a donor DU of the target donor node, a BAP address of a donor CU of the target donor node, or a BAP address of the target donor node. The path identifier is used to indicate a path to the target receiving node of the uplink data, and the path passes through the target parent node. The UL BAP routing ID may be default. The bearer mapping configuration included in the configuration information includes a UL BH RLC CH identifier. A UL BH RLC CH identified by the UL BH RLC CH identifier is an RLC CH between the IAB node (or the IAB-MT) and the target parent node, and is used by the IAB node (or the IAB-MT) to send the uplink data to the target donor node through the target parent node. In other words, the routing configuration and the bearer mapping configuration included in the configuration information may be a first uplink routing configuration and a first bearer mapping configuration.

In another case, the routing configuration included in the configuration information may be a second uplink routing configuration, and the bearer mapping configuration included in the configuration information may be a second bearer mapping configuration. For details, refer to the foregoing descriptions for understanding. Details are not described again.

The uplink data is one or more of the following data: an F1 interface establishment related message, an F1 interface control plane message (namely, an F1-C/F1^{∗}-C message), an SCTP data packet, and the like. Optionally, the uplink data does not include an RRC reconfiguration complete message between the IAB node and the target parent node.

Optionally, the configuration information is carried in the RRC message or the F1AP message. When the source donor node sends the configuration information to the IAB node by using the F1AP message, the configuration information is sent to an IAB-DU. After receiving the configuration information, the IAB-DU may send the configuration information to the IAB-MT, so that the IAB-MT can use the configuration information.

Further, the configuration information may be carried in an RRC reconfiguration message in which a handover command sent by the source donor node to the IAB node (or the IAB-MT) through the source parent node is located.

Optionally, the configuration information includes: uplink synchronization information, a dedicated random access resource, or uplink resource information of a random access procedure message 3. In this case, because the IAB node (or the IAB-MT) may obtain the uplink synchronization information, the dedicated random access resource, or the uplink resource information of the random access procedure message 3, a random access procedure between the IAB node (or the IAB-MT) and the target parent node in a subsequent process can be simplified.

1004: In a process in which the IAB node is handed over from the source parent node to the target parent node, the IAB node (or the IAB-MT) sends the uplink data to the target donor node by using the configuration information through the target parent node.

According to the method provided in this embodiment of this application, the source donor node sends the configuration information to the IAB node through a source node, so that the IAB node can obtain the configuration information earlier, and send the uplink data to the target donor node through the target parent node as early as possible. This optimizes an information configuration procedure of the IAB node in a handover process, reduces a handover delay of the IAB node, and reduces data transmission interruption time of the IAB node in the handover process.

The first uplink routing configuration and the first bearer mapping configuration (which are described as the first uplink routing configuration and the first bearer mapping configuration between the IAB node and the source parent node below) that are configured by the source donor node for the IAB node by using the RRC message, and the second uplink routing configuration and the second bearer mapping configuration (which are described as the second uplink routing configuration and the second bearer mapping configuration between the IAB node and the source parent node below) that are configured by the source donor node for the IAB node by using the F1AP message may alternatively exist in the IAB node. These configurations are used by the IAB node (or the IAB-MT) to send the uplink data to the source donor node through the source node. The routing configuration and the bearer mapping configuration in the configuration information are used by the IAB node (or the IAB-MT) to send the uplink data to the target donor node through the target parent node. In this case, the IAB node (or the IAB-MT) may also send the uplink data to the source donor node through the source node. Therefore, to prevent the configuration information from affecting uplink transmission performed by the IAB node (or the IAB-MT) with the source donor node through the source node, optionally, the configuration information further includes indication information, where the indication information is used to indicate to suspend (suspend) the routing configuration and/or the bearer mapping configuration in the configuration information. In this case, the method further includes: The IAB node (or the IAB-MT) suspends the routing configuration and/or the bearer mapping configuration in the configuration information based on the indication information. Suspension means that the routing configuration and/or the bearer mapping configuration are/is not used temporarily or do/does not take effect temporarily.

It should be noted that, when the second uplink routing configuration and the second bearer mapping configuration that are configured by using the F1AP message exist, the first uplink routing configuration and the first bearer mapping configuration that are configured by using the RRC message do not take effect. Therefore, when the configuration information is carried in the RRC message, the configuration in the configuration information does not take effect either, and the configuration information may not carry the indication information either.

Optionally, after the IAB node (or the IAB-MT) establishes an RRC connection to the target donor node through the target parent node, the IAB node (or the IAB-MT) needs to send the uplink data to the target donor node through the target parent node. Therefore, after the IAB node (or the IAB-MT) establishes the RRC connection to the target parent node, the method further includes: The IAB node (or the IAB-MT) makes the routing configuration and/or the bearer mapping configuration in the configuration information take effect. In a subsequent process, the IAB node (or the IAB-MT) may send the uplink data to the target donor node by using the configuration information through the target parent node.

It should be noted that, after stopping transmission of the uplink data with the source parent node and before sending the uplink data to the target donor node through the target parent node, the IAB node (or the IAB-MT) only needs to make the routing configuration and/or the bearer mapping configuration in the configuration information take effect. That the IAB node (or the IAB-MT) makes the routing configuration and/or the bearer mapping configuration take effect after establishing the RRC connection to the target parent node is merely an example. For example, the IAB node (or the IAB-MT) may alternatively make the routing configuration and/or the bearer mapping configuration in the configuration information take effect when the IAB node (or the IAB-MT) completes a random access procedure with the target parent node or the IAB node (or the IAB-MT) sends, to the target donor node, an RRC reconfiguration complete message indicating that handover is complete.

The first uplink routing configuration and the first bearer mapping configuration between the IAB node (or the IAB-MT) and the source parent node, and the second uplink routing configuration and the second bearer mapping configuration between the IAB node (or the IAB-MT) and the source parent node may alternatively exist in the IAB node (or the IAB-MT). These configurations are used by the IAB node (or the IAB-MT) to send the uplink data to the source donor node through the source node. In this case, the IAB node (or the IAB-MT) needs to send the uplink data to the target donor node through the target parent node. Therefore, to prevent an original configuration from affecting current uplink transmission, optionally, the method further includes: The IAB node (or the IAB-MT) releases or suspends the routing configuration and the bearer mapping configuration between the IAB node (or the IAB-MT) and the source parent node. Release may be understood as deletion. The routing configuration and the bearer mapping configuration between the IAB node (or the IAB-MT) and the source parent node include: the first uplink routing configuration and the first bearer mapping configuration between the IAB node (or the IAB-MT) and the source parent node, and the second uplink routing configuration and the second bearer mapping configuration between the IAB node (or the IAB-MT) and the source parent node.

Optionally, when the configuration message is configured by using the RRC message, an implementation process in which the IAB node (or the IAB-MT) releases or suspends the routing configuration and the bearer mapping configuration between the IAB node (or the IAB-MT) and the source parent node includes: The IAB node (or the IAB-MT) overwrites (overwrite) the first uplink routing configuration and the first bearer mapping configuration between the IAB node (or the IAB-MT) and the source parent node, and releases or suspends the second uplink routing configuration and the second bearer mapping configuration between the IAB node (or the IAB-MT) and the source parent node.

Optionally, when the configuration message is configured by using the F1AP message, an implementation process in which the IAB node (or the IAB-MT) releases or suspends the routing configuration and the bearer mapping configuration between the IAB node (or the IAB-MT) and the source parent node includes: The IAB node (or the IAB-MT) overwrites the second uplink routing configuration and the second bearer mapping configuration between the IAB node (or the IAB-MT) and the source parent node, and optionally releases or suspends the first uplink routing configuration and the first bearer mapping configuration between the IAB node (or the IAB-MT) and the source parent node. When the configuration message is configured by using the F1AP message, the first uplink routing configuration and the first bearer mapping configuration between the IAB node (or the IAB-MT) and the source parent node do not take effect. Therefore, the IAB node (or the IAB-MT) may not process the first uplink routing configuration and the first bearer mapping configuration between the IAB node (or the IAB-MT) and the source parent node.

In this embodiment of this application, the solution in which "the IAB node (or the IAB-MT) releases or suspends the routing configuration and the bearer mapping configuration between the IAB node (or the IAB-MT) and the source parent node" may not be coupled to another solution in this embodiment of this application, but is implemented as an independent solution. When the second uplink routing configuration and the second bearer mapping configuration between the IAB node (or the IAB-MT) and the source parent node exist in the IAB node (or the IAB-MT), if the source donor node or the target donor node sends the configuration information to the IAB node (or the IAB-MT) by using the RRC message in a handover process of the IAB node (or the IAB-MT), a new configuration cannot take effect, thereby affecting data transmission. This solution can resolve this problem. In addition to being applied to an IAB node handover scenario, this solution may also be applied to an RRC connection reestablishment scenario of the IAB node. In this case, when the IAB node is reestablished to a new target parent node and/or a new target donor node, and the target donor node sends the configuration information to the IAB node (or the IAB-MT) by using the RRC message, the new configuration cannot take effect, thereby affecting data transmission. This solution can resolve this problem. The source donor node before reestablishment and the target donor node may also be a same donor node.

Optionally, the source donor node and the target donor node are different nodes, and the method further includes: The source donor node receives the configuration information from the target donor node.

Optionally, the configuration information is carried in a handover response. Specifically, the source donor node sends a handover request to the target donor node, where the handover request is used to request the IAB node to be handed over from the source parent node to the target parent node. The target donor node sends the handover response to the source donor node based on the handover request, where the handover response may include the configuration information.

Certainly, the source donor node may not request the configuration information by using the handover request, but specifically request the configuration information by using a request message. This is not limited in this application. In addition, the configuration information may not be carried in the handover response, but may be carried in another message (for example, in a response message of a request message that is specifically used to request the configuration information). This is not limited in this application.

The source donor node and the target donor node may communicate with each other through an Xn interface or an X2 interface. When there is no direct connection between the source donor node and the target donor node, the configuration information may be relayed between the source donor node and the target donor node through a core network. Specifically, the target donor node may first send the configuration information to a core network node by using an S1 or Ng interface message, and then the core network node sends the configuration information to the source donor node by using the S1 or Ng interface message.

The following uses the foregoing scenario 1 and scenario 2 as examples to describe an implementation procedure of the method provided in this application.

In the scenario 1, the target parent node and the source parent node access a same donor node (in other words, the source donor node and the target donor node are a same node).

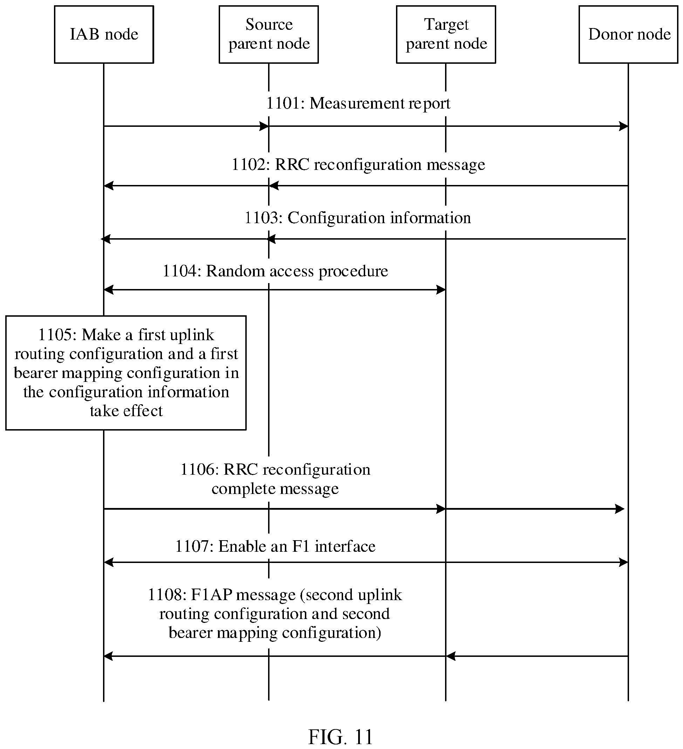

As shown in FIG. 11, in the scenario 1, the method provided in this embodiment of this application includes the following steps.

1101: This step is the same as step 801.

1102: This step is the same as step 802.

1103: The donor node sends configuration information to the IAB node through the source parent node.

The configuration information may include: a first uplink routing configuration, a first bearer mapping configuration, and indication information. After receiving the configuration information, the IAB node may suspend the first uplink routing configuration and the first bearer mapping configuration in the configuration information based on the indication information.

It should be noted that the configuration information sent by the donor node to the IAB node through the source parent node may be carried in the RRC reconfiguration message. In this case, step 1102 and step 1103 may be combined into one step. If step 1102 and step 1103 are independent steps, there is no execution sequence between step 1102 and step 1103.

1104: This step is the same as step 803.

1105: The IAB node (or the IAB-MT) makes the first uplink routing configuration and the first bearer mapping configuration in the configuration information take effect.

After making the first uplink routing configuration and the first bearer mapping configuration in the configuration information take effect, the IAB node may further release or suspend the routing configuration and the bearer mapping configuration between the IAB node and the source parent node.

1106: This step is the same as step 804.

There is no execution sequence between step 1105 and step 1106.

1107: This step is the same as step 806.

In step 1107, the IAB node (or the IAB-MT) may send uplink data to the donor node by using the first uplink routing configuration and the first bearer mapping configuration in the configuration information through the target parent node.

1108: This step is the same as step 807.

In the scenario 1, it is assumed that the handed-over IAB node is an IAB node 3. The following describes, by using an example, a scenario to which this application is applicable when the donor node is a complete donor node (denoted as a case 1) and the donor node is in a CU-DU separation form (denoted as a case 2).

In the case 1, the donor node is the complete donor node.

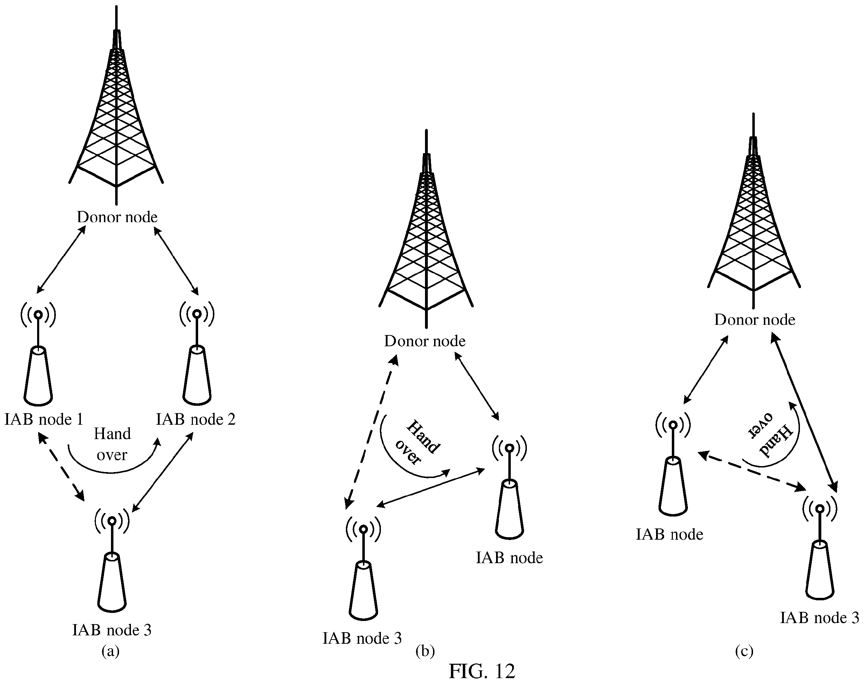

In the first possible implementation, refer to (a) in FIG. 12. Both the source parent node and the target parent node are IAB nodes (specifically, IAB-DUs). For example, the IAB node 3 is handed over from an IAB node 1 (the source parent node) to an IAB node 2 (the target parent node).

In the second possible implementation, refer to (b) in FIG. 12. The source parent node and the donor node are a same node, and the target parent node is an IAB node (specifically, an IAB-DU). In this case, in the foregoing step of communicating with the donor node through the source parent node, the IAB node 3 directly communicates with the donor node.

In the third possible implementation, refer to (c) in FIG. 12. The source parent node is an IAB node (specifically, an IAB-DU), and the target parent node and the donor node are a same node. In this case, in the foregoing step of communicating with the donor node through the target parent node, the IAB node 3 directly communicates with the donor node.

In the case 2, the donor node is in the CU-DU separation form.

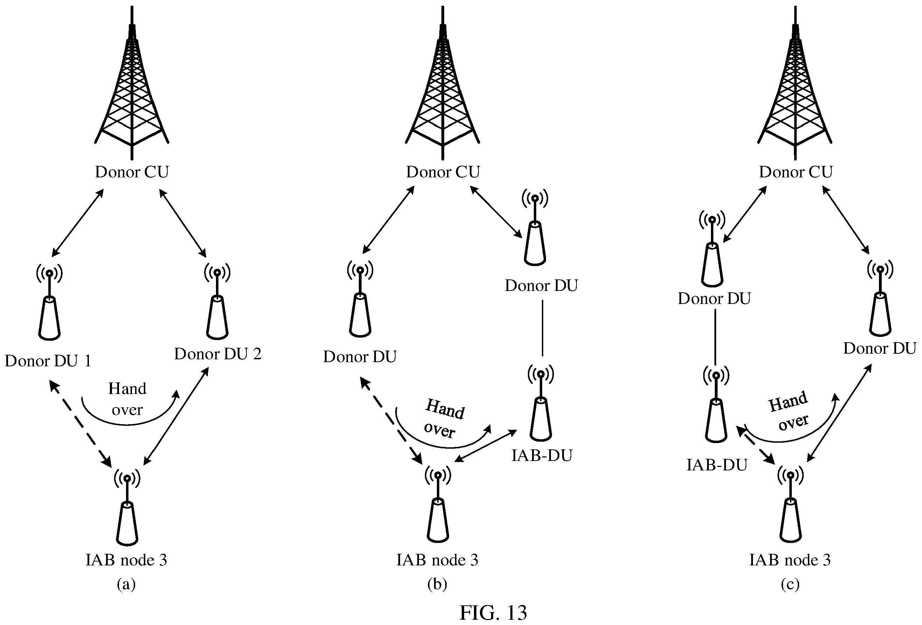

In the first possible implementation, refer to (a) in FIG. 13. Both the source parent node and the target parent node are donor DUs, and both the source parent node and the target parent node access a donor CU. For example, the IAB node 3 is handed over from a donor DU 1 (the source parent node) to a donor DU 2 (the target parent node).

In the second possible implementation, refer to (b) in FIG. 13. The source parent node is a donor DU, the target parent node is an IAB-DU, and both the source parent node and the target parent node access a donor CU.

In the third possible implementation, refer to (c) in FIG. 13. The source parent node is an IAB-DU, the target parent node is a donor DU, and both the source parent node and the target parent node access a donor CU.

In the scenario 2, the target parent node and the source parent node access different donor nodes (in other words, the source donor node and the target donor node are different nodes).

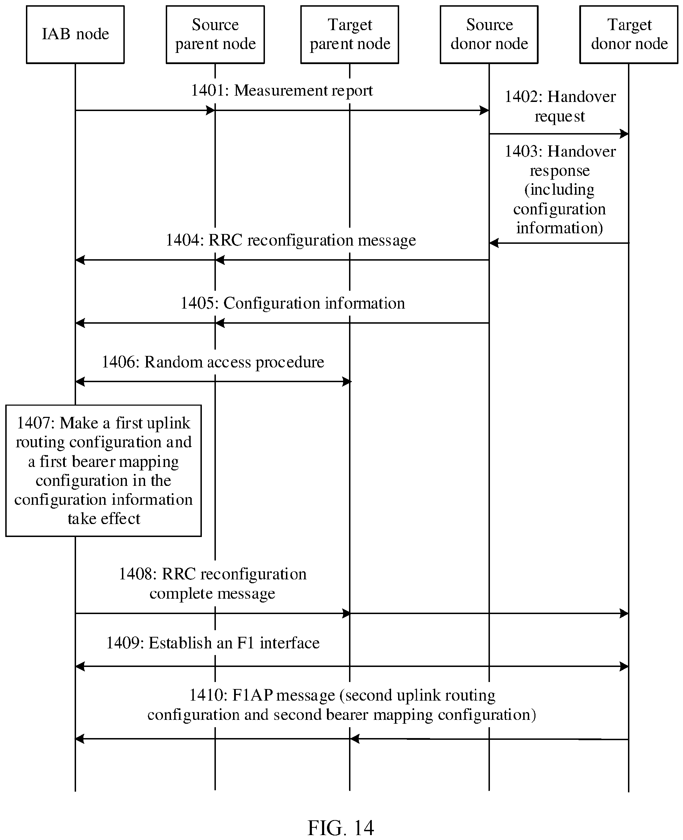

As shown in FIG. 14, in the scenario 2, the method provided in this embodiment of this application includes the following steps.

1401: This step is the same as step 901.

1402: This step is the same as step 902.

1403: The target donor node sends a handover response to the source donor node, where the handover response includes configuration information.

The configuration information may include: a first uplink routing configuration, a first bearer mapping configuration, and indication information.

1404: This step is the same as step 904.

1405: The source donor node sends the configuration information to the IAB node through the source parent node.

After receiving the configuration information, the IAB node (or the IAB-MT) may suspend the first uplink routing configuration and the first bearer mapping configuration in the configuration information based on the indication information.

It should be noted that the indication information may be carried in the configuration information sent by the target donor node to the source donor node, or may be added to the configuration information to be sent to the IAB node after the donor node receives the configuration information that does not include the indication information and before the donor node sends the configuration information to the IAB node. This is not limited in this application.

It should be noted that the configuration information sent by the donor node to the IAB node through the source parent node may be carried in the RRC reconfiguration message. In this case, step 1404 and step 1405 may be combined into one step. If step 1404 and step 1405 are independent steps, there is no execution sequence between step 1404 and step 1405.

1406: This step is the same as step 905.

1407: This step is the same as step 1105.

1408: This step is the same as step 906.

There is no execution sequence between step 1407 and step 1408.

1409: This step is the same as step 908.

In step 1409, the IAB node (or the IAB-MT) may send uplink data to the target donor node by using the first uplink routing configuration and the first bearer mapping configuration in the configuration information through the target parent node.

1410: This step is the same as step 909.

In the scenario 2, it is assumed that the handed-over IAB node is an IAB node 3. The following describes, by using an example, a scenario to which this application is applicable when the donor node is a complete donor node (denoted as a case 1) and the donor node is in a CU-DU separation form (denoted as a case 2).

In the case 1, the donor node is the complete donor node.

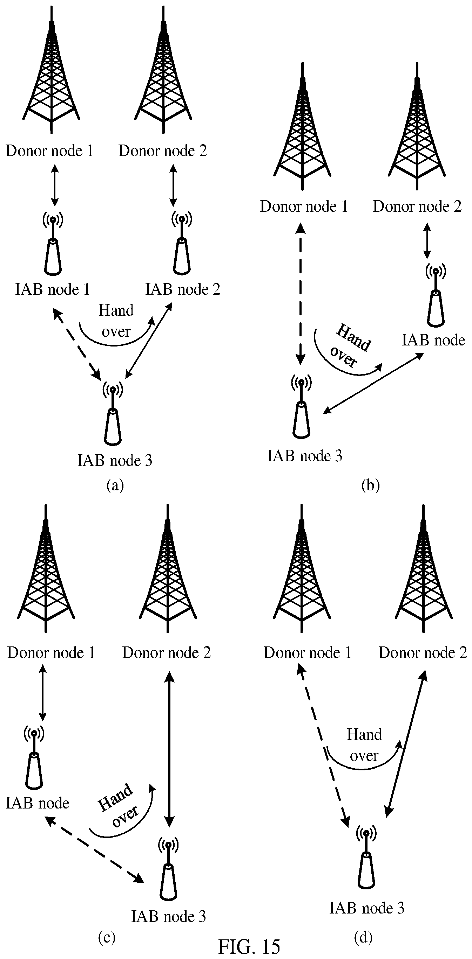

In the first possible implementation, refer to (a) in FIG. 15. Both the source parent node and the target parent node are IAB nodes (specifically, IAB-DUs), and the source parent node and the target parent node access different donor nodes. For example, the IAB node 3 is handed over from an IAB node 1 (the source parent node) to an IAB node 2 (the target parent node), the IAB node 1 accesses a donor node 1, and the IAB node 2 accesses a donor node 2.

In the second possible implementation, refer to (b) in FIG. 15. The source parent node and the source donor node (namely, a donor node 1) are a same node, and the target parent node is an IAB node (specifically, an IAB-DU). In this case, in the foregoing step of communicating with the source donor node through the source parent node, the IAB node 3 directly communicates with the source donor node.

In the third possible implementation, refer to (c) in FIG. 15. The source parent node is an IAB node (specifically, an IAB-DU), and the target parent node and the target donor node (namely, a donor node 2) are a same node. In this case, in the foregoing step of communicating with the target donor node through the target parent node, the IAB node 3 directly communicates with the target donor node.

In the fourth possible implementation, refer to (d) in FIG. 15. The source parent node and the source donor node (namely, a donor node 1) are a same node, and the target parent node and the target donor node (namely, a donor node 2) are a same node. In this case, in the foregoing step of communicating with the source donor node through the source parent node, the IAB node 3 directly communicates with the source donor node. In the foregoing step of communicating with the target donor node through the target parent node, the IAB node 3 directly communicates with the target donor node.

In the case 2, the donor node is in the CU-DU separation form.

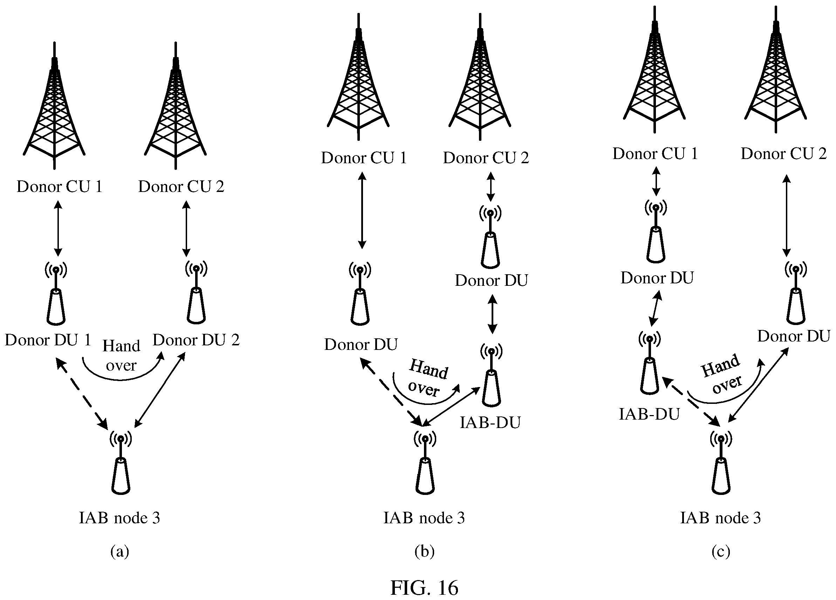

In the first possible implementation, refer to (a) in FIG. 16. Both the source parent node and the target parent node are donor DUs, and the source parent node and the target parent node access different donor CUs. For example, the IAB node 3 is handed over from a donor DU 1 (the source parent node) to a donor DU 2 (the target parent node), the donor DU 1 accesses a donor CU 1, and the donor DU 2 accesses a donor CU 2.

In the second possible implementation, refer to (b) in FIG. 16. The source parent node is a donor DU, the target parent node is an IAB-DU, and the source parent node and the target parent node respectively access a donor CU 1 and a donor CU 2.

In the third possible implementation, refer to (c) in FIG. 16. The source parent node is an IAB-DU, the target parent node is a donor DU, and the source parent node and the target parent node respectively access a donor CU 1 and a donor CU 2.

The IAB node to be handed over from the source parent node to the target parent node in the foregoing embodiment may be denoted as a first IAB node, the configuration information received by the first IAB node may be denoted as first configuration information, and the indication information included in the first configuration information may be denoted as first indication information. A UL BH RLC CH in the first configuration information may also be a default UL BH RLC CH.

The RRC message carrying the first configuration information may be a message in an RRC connection establishment process, an RRC connection reestablishment process, or an RRC connection resume process. For example, the first configuration information is carried in an RRC reestablishment (RRCReestablishment) message, an RRC establishment (RRCSetup) message, or an RRC resume (RRCResume) message sent by the source donor node to the first IAB node. Alternatively, the RRC message carrying the first configuration information may be a message after an RRC connection establishment process, an RRC connection reestablishment process, or an RRC connection resume process. For example, the first configuration information is carried in an RRC reconfiguration message sent by the source donor node to the first IAB node.

In this application, the uplink data may include a non-F1 interface (non-F1) message. A non-F1 interface message sent by an IAB node may include, for example, an SCTP message (Chunk) in a process in which the IAB node establishes an SCTP association (Association) with the target donor node by using an IP address of the IAB node. The uplink data may include an F1 interface control plane message. For example, the F1 interface control plane message may be an interface management message related to F1 connection establishment or configuration update, such as an F1 establishment request (F1 SETUP REQUEST) or donor DU configuration update (GNB-DU CONFIGURATION UPDATE).

In the foregoing embodiment, if the first IAB node has a plurality of parent nodes, optionally, the first configuration information further includes a BAP address of the target parent node. The BAP address indicates that the first configuration information is used for transmission of the uplink data between the first IAB node and the target donor node through the target parent node. For example, the BAP address may be combined with the UL BH RLC CH identifier to identify the UL BH RLC CH between the first IAB node and the target parent node. Optionally, the first configuration information further includes another set of routing configurations and/or bearer mapping configurations used by the first IAB node to send the uplink data to a corresponding donor node through another parent node (a parent node other than the target parent node). Optionally, the another set of routing configurations and/or bearer mapping configurations further includes a BAP address of the another parent node of the first IAB node. The BAP address indicates that the another set of routing configurations and/or bearer mapping configurations is used to send the uplink data to the corresponding donor node through the another parent node.

In the foregoing embodiment, a process of configuring the routing configuration and/or the bearer mapping configuration for the first IAB node is described, and a problem of how the first IAB node transmits the uplink data (for example, an F1 interface establishment related message, an F1 interface control plane message, an SCTP data packet, and a non-F1 interface (non-F1) message) by using a BAP layer before the first IAB node obtains the second uplink routing configuration and the second bearer mapping configuration between the first IAB node and the target donor node is resolved. Specifically, the first IAB node may send the uplink data to the target parent node by using the routing configuration and/or the bearer mapping configuration of the BAP layer that are/is configured by using the first configuration information, and send the uplink data to the target donor node through the target parent node.

It may be understood that, if the parent node accessed by the first IAB node is handed over from the source parent node to the target parent node, a downstream node (denoted as a second IAB node) of the first IAB node is also handed over from the source parent node to the target parent node through the first IAB node. For example, if a source parent node of an IAB node 1 accesses a donor node 1, and a target parent node of the IAB node 1 accesses a donor node 2, a child node IAB node 2 of the IAB node 1 is handed over to the donor node 2 with the IAB node 1. In other words, due to handover of the IAB node 1, the IAB node 2 accesses the donor node 2 through the IAB node 1. Alternatively, if the parent node accessed by the first IAB node is handed over from the source parent node to the target parent node, a second IAB node also needs to be handed over from the source parent node of the first IAB node to the target parent node of the first IAB node with the first IAB node. In other words, due to handover of the first IAB node, the second IAB node accesses the target parent node of the first IAB node through the first IAB node. The downstream node of the first IAB node is a node that receives an uplink data packet before the first IAB node on an uplink transmission path including the first IAB node. For example, the second IAB node may be a child node of the first IAB node, or may be a child node of a child node of the first IAB node. FIG. 1 is used as an example. If the first IAB node is an IAB node 2, the second IAB node is an IAB node 3 or an IAB node 4. If the first IAB node is an IAB node 1, the second IAB node is an IAB node 2, an IAB node 3, an IAB node 4, or an IAB node 5.

In this case, the second IAB node also needs to obtain a new IP address related to a DU of the target donor node, and establish a new SCTP association with the target donor node by using the new IP address. The uplink data (for included content, refer to the foregoing descriptions) between the second IAB node and the target donor node is transmitted by using the new SCTP association. Therefore, like the first IAB node, the second IAB node also needs to resolve a problem of how to transmit the uplink data (for included content, refer to the foregoing descriptions) before obtaining the routing configuration and/or the bearer mapping configuration between the second IAB node and the target donor node by using the F1AP message.

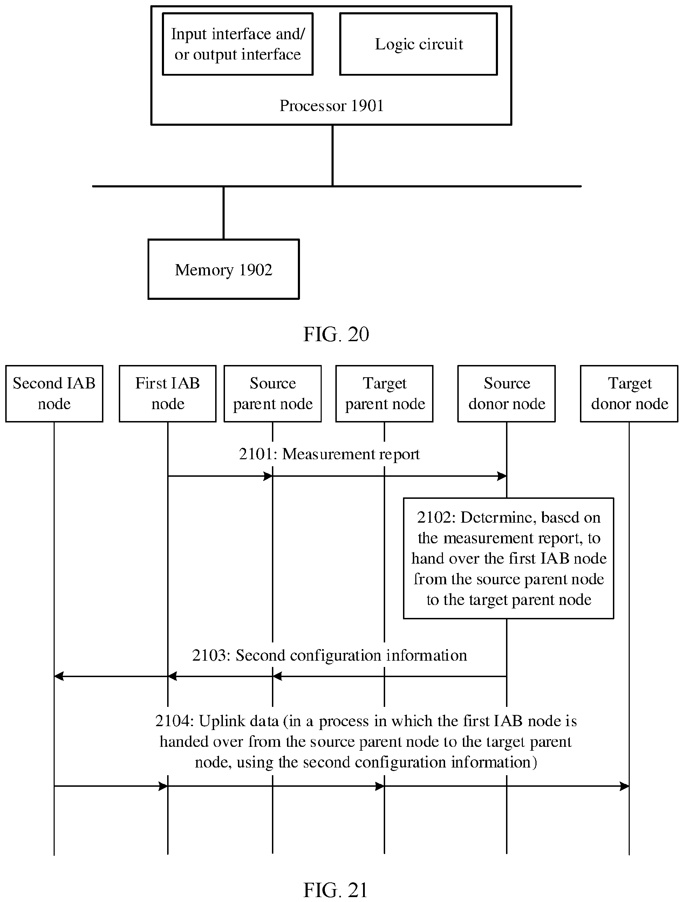

For the second IAB node, similar to the first IAB node, before handover of the first IAB node, the second IAB node has received the first uplink routing configuration and the first bearer mapping configuration between the second IAB node and the source donor node, and the second uplink routing configuration and the second bearer mapping configuration between the second IAB node and the source donor node. These configurations are used by the second IAB node to send the uplink data to the source donor node. After the first IAB node is handed over, these configurations cannot be used by the second IAB node to send the uplink data to the target donor node. Therefore, this application further proposes a communication method. The method may be implemented in combination with the foregoing method, or may be independently implemented. Refer to FIG. 21. The method includes the following steps.

2101: A first IAB node (or an MT part of the first IAB node) sends a measurement report to a source donor node through a source parent node. Correspondingly, the source donor node receives the measurement report from the first IAB node (or the MT part of the first IAB node) through the source parent node.

For a specific implementation of step 2101, refer to step 1001. Details are not described again.

2102: The source donor node determines, based on the measurement report, to hand over the first IAB node (or the MT part of the first IAB node) from the source parent node to a target parent node.

For a specific implementation of step 2102, refer to step 1002. Details are not described again.

2103: The source donor node sends second configuration information to a second IAB node (or an MT part of the second IAB node) through the source parent node. Correspondingly, the second IAB node (or the MT part of the second IAB node) receives the second configuration information from the source donor node through the source parent node.

Optionally, the second configuration information includes: a routing configuration and/or a bearer mapping configuration, and the second configuration information is used by the second IAB node (or the MT part of the second IAB node) to perform transmission of uplink data with a target donor node through the target parent node of the first IAB node. It may be understood that the second IAB node needs to communicate with the target parent node of the first IAB node through the first IAB node. The source parent node is a node accessed by the first IAB node before handover, the target parent node is a node accessed by the first IAB node after handover, the source donor node is a donor node accessed by the source parent node, and the target donor node is a donor node accessed by the target parent node. For other descriptions of these nodes, refer to the foregoing descriptions. Details are not described again.

The uplink data is one or more of the following data: an F1 interface establishment related message, an F1 interface control plane message, an SCTP data packet, some necessary non-F1 interface messages, and the like.

In one case, the routing configuration included in the configuration information may be a second uplink routing configuration configured for the second IAB node, and the bearer mapping configuration included in the configuration information may be a second bearer mapping configuration configured for the second IAB node. For details, refer to the foregoing descriptions for understanding. Details are not described again.

In another case, the routing configuration in the second configuration information includes one UL BAP routing ID. The UL BAP routing ID includes a BAP address and a path identifier of a target receiving node (namely, the target donor node) of the uplink data. The BAP address of the target receiving node of the uplink data may be a BAP address of a donor DU of the target donor node, a BAP address of a donor CU of the target donor node, or a BAP address of the target donor node. The path identifier is used to identify an uplink path, and the uplink path is a transmission path from the second IAB node to the target donor node. Optionally, the UL BAP routing ID may be a default (or default) UL BAP routing ID. The bearer mapping configuration in the second configuration information includes a UL BH RLC CH identifier, and a UL BH RLC CH identified by the UL BH RLC CH identifier is a UL BH RLC CH on a link between the second IAB node and a parent node of the second IAB node. On the transmission path from the second IAB node to the target donor node, the UL BH RLC CH may be used to carry the uplink data sent by the second IAB node to the parent node of the second IAB node. Optionally, the UL BH RLC CH may alternatively be a default UL BH RLC CH.

In the foregoing another case, it should be noted that, if the second IAB node has a plurality of parent nodes, and the second IAB node is handed over to the target parent node of the first IAB node with the first IAB node, optionally, the second configuration information further includes a BAP address of the first IAB node. The BAP address indicates that the second configuration information is used for transmission of the uplink data between the second IAB node and the target donor node through the first IAB node. For example, the BAP address may be combined with the UL BH RLC CH identifier to identify a UL BH RLC CH between the second IAB node and a first parent node. For example, the first parent node may be a parent node corresponding to a master cell group (Master cell group, MCG) of the second IAB node. It may be understood that, if the second IAB node transmits the uplink data through the parent node corresponding to the MCG of the second IAB node by default, the second configuration information may not include a BAP address of the parent node of the second IAB node.

In the foregoing another case, optionally, the second configuration information further includes another set of routing configurations and/or bearer mapping configurations used by the second IAB node to send the uplink data to a corresponding donor node through another parent node (a parent node other than the first parent node). Optionally, the another set of routing configurations and/or bearer mapping configurations further includes a BAP address of the another parent node of the second IAB node. The BAP address indicates that the another set of routing configurations and/or bearer mapping configurations is used to send the uplink data to the corresponding donor node through the another parent node.

In the foregoing another case, it may be understood that if the second IAB node has only one parent node, the second configuration information does not need to include the BAP address of the parent node of the second IAB node.

In the foregoing another case, optionally, the second configuration information further includes a BAP address allocated to the second IAB node, and the BAP address may be used by the second IAB node to determine whether a target node of a received data packet is the second IAB node.

Optionally, the second configuration information is carried in an RRC message or an F1AP message. For example, the RRC message may be a message in an RRC connection establishment process, an RRC connection reestablishment process, or an RRC connection resume process. For example, the second configuration information is carried in an RRC reestablishment (RRCReestablishment) message, an RRC establishment (RRCSetup) message, or an RRC resume (RRCResume) message sent by the source donor node to the second IAB node. Alternatively, the RRC message may be a message after an RRC connection establishment process, an RRC connection reestablishment process, or an RRC connection resume process is complete. For example, the second configuration information is carried in an RRC reconfiguration message sent by the source donor node to the second IAB node.

2104: In a process in which the first IAB node is handed over from the source parent node to the target parent node, the second IAB node (or the MT part of the second IAB node) sends the uplink data to the target donor node by using the second configuration information through the target parent node.

According to the communication method provided in this application, when the first IAB node is handed over, the second configuration information may be sent to the second IAB node, so that the second IAB node can send the uplink data to the target donor node by using the second configuration information, to avoid a problem that necessary uplink data or uplink signaling cannot be successfully transmitted because the routing configuration and/or the bearer mapping configuration between the second IAB node and the source donor node are/is still used to process the uplink data or the uplink signaling. In addition, the source donor node sends the second configuration information to the second IAB node through a source node, so that the second IAB node can obtain the second configuration information earlier, and send the uplink data to the target donor node through the target parent node as early as possible. This optimizes an information configuration procedure of the second IAB node in a handover process of the first IAB node, reduces a handover delay of the second IAB node, and reduces data transmission interruption time of the second IAB node in the handover process of the first IAB node.

Before handover of the first IAB node, the second IAB node receives a first uplink routing configuration and a first bearer mapping configuration (which are described as a first uplink routing configuration and a first bearer mapping configuration between the second IAB node and the source parent node below) that are configured by the source donor node for the second IAB node by using the RRC message, and the second uplink routing configuration and the second bearer mapping configuration (which are described as the second uplink routing configuration and the second bearer mapping configuration between the second IAB node and the source parent node below) that are configured by the source donor node for the second IAB node by using the F1AP message. These configurations are used by the second IAB node (or the MT part of the second IAB node) to send the uplink data to the source donor node through the source node. In this case, the second IAB node (or the MT part of the second IAB node) needs to send the uplink data to the target donor node through the target parent node. Therefore, to prevent an original configuration from affecting current uplink transmission, optionally, the method further includes: The second IAB node (or the MT part of the second IAB node) releases or suspends the routing configuration and the bearer mapping configuration on a source transmission path of the second IAB node through the source parent node of the first IAB node. In other words, the second IAB node (or the MT part of the second IAB node) releases or suspends the routing configuration and the bearer mapping configuration between the second IAB node and the source parent node. Release may be understood as deletion. The routing configuration and the bearer mapping configuration between the second IAB node and the source parent node include: the first uplink routing configuration and the first bearer mapping configuration between the second IAB node and the source parent node, and the second uplink routing configuration and the second bearer mapping configuration between the second IAB node and the source parent node.

Optionally, when the second configuration message is configured by using the RRC message, an implementation process in which the second IAB node (or the MT part of the second IAB node) releases or suspends the routing configuration and the bearer mapping configuration between the second IAB node and the source parent node includes: The second IAB node (or the MT part of the second IAB node) overwrites (overwrite) the first uplink routing configuration and the first bearer mapping configuration between the second IAB node (or the MT part of the second IAB node) and the source parent node, and releases or suspends the second uplink routing configuration and the second bearer mapping configuration between the second IAB node (or the MT part of the second IAB node) and the source parent node.

Optionally, when the second configuration message is configured by using the F1AP message, an implementation process in which the second IAB node (or the MT part of the second IAB node) releases or suspends the routing configuration and the bearer mapping configuration between the second IAB node (or the MT part of the second IAB node) and the source parent node includes: The second IAB node (or the MT part of the second IAB node) overwrites the second uplink routing configuration and the second bearer mapping configuration between the second IAB node (or the MT part of the second IAB node) and the source parent node, and optionally releases or suspends the first uplink routing configuration and the first bearer mapping configuration between the second IAB node (or the MT part of the second IAB node) and the source parent node. When the second configuration message is configured by using the F1AP message, the first uplink routing configuration and the first bearer mapping configuration between the second IAB node and the source parent node do not take effect. Therefore, the second IAB node (or the MT part of the second IAB node) may not process the first uplink routing configuration and the first bearer mapping configuration between the second IAB node (or the MT part of the second IAB node) and the source parent node.

In this embodiment of this application, a solution in which "the second IAB node (or the MT part of the second IAB node) releases or suspends the routing configuration and the bearer mapping configuration between the second IAB node (or the MT part of the second IAB node) and the source parent node" may not be coupled to another solution in this embodiment of this application, but is implemented as an independent solution. When the second uplink routing configuration and the second bearer mapping configuration between the second IAB node (or the MT part of the second IAB node) and the source parent node exist in the second IAB node (or the MT part of the second IAB node), if the source donor node or the target donor node sends the second configuration information to the second IAB node (or the MT part of the second IAB node) by using the RRC message in a handover process of the second IAB node (or the MT part of the second IAB node), a new configuration cannot take effect, thereby affecting data transmission. This solution can solve this problem. In addition to being applied to a first IAB node handover scenario, this solution may also be applied to an RRC connection reestablishment scenario of the first IAB node. In this case, when the first IAB node is reestablished to a new target parent node and/or a new target donor node, and the target donor node sends the second configuration information to the second IAB node (or the MT part of the second IAB node) by using the RRC message, the new configuration cannot take effect, thereby affecting data transmission. This solution can resolve this problem. The source donor node before reestablishment and the target donor node may also be a same donor node.

Optionally, the source donor node and the target donor node are different nodes, and the method further includes: The source donor node receives the second configuration information from the target donor node. For communication between the source donor node and the target donor node, refer to the foregoing descriptions. Details are not described again.

Optionally, the second configuration information is carried in a handover response. Specifically, the source donor node sends a handover request to the target donor node, where the handover request is used to request the second IAB node to be handed over from the source parent node to the target parent node with the first IAB node. The target donor node sends the handover response to the source donor node based on the handover request, where the handover response may include the second configuration information.

Certainly, the source donor node may not request the second configuration information by using the handover request, but specifically request the second configuration information by using a request message. This is not limited in this application. In addition, the second configuration information may not be carried in the handover response, but may be carried in another message (for example, in a response message of a request message that is specifically used to request the second configuration information). This is not limited in this application.

Optionally, the second configuration information further includes second indication information, and the second indication information is used to indicate the second IAB node to release or suspend the routing configuration and the bearer mapping configuration between the second IAB node and the source parent node, or suspend a BAP entity, or indicate a BAP layer or a BAP entity to stop performing an operation such as packet assembly or BAP packet header adding. The routing configuration and the bearer mapping configuration that are in a suspended state are reserved, but data packet processing rules corresponding to these configurations are in an invalid (invalid) state, and the second IAB node does not use any rule corresponding to the suspended configuration to process a to-be-sent data packet or a received data packet. When handover of the first IAB node fails, the first IAB node and the second IAB node need to fall back to the source parent node and transmission paths between the first IAB node and the second IAB node and the source parent node for transmission. In this case, the first IAB node and the second IAB node may resume the previously suspended routing configuration and the previously suspended bearer mapping configuration between the first IAB node and the second IAB node and the source parent node.

The second indication information may be explicit indication information. For example, the second indication information is implemented by using one bit. When a value of the bit is 1, it indicates that the second IAB node needs to release or suspend the routing configuration and the bearer mapping configuration between the second IAB node and the source parent node. When a value of the bit is 0, it indicates that the second IAB node does not need to release or suspend the routing configuration and the bearer mapping configuration between the second IAB node and the source parent node. Alternatively, when the bit exists, it indicates that the second IAB node needs to release or suspend the routing configuration and the bearer mapping configuration between the second IAB node and the source parent node; otherwise, it indicates that the second IAB node does not need to release or suspend the routing configuration and the bearer mapping configuration between the second IAB node and the source parent node.

The second indication information may alternatively be implicit indication information. For example, if the second configuration information includes reconfiguration information for the first uplink routing configuration and/or the first bearer mapping configuration, it indicates that the second IAB node needs to release or suspend the routing configuration and the bearer mapping configuration between the second IAB node and the source parent node; otherwise, it indicates that the second IAB node does not need to release or suspend the routing configuration and the bearer mapping configuration between the second IAB node and the source parent node.

Specifically, in consideration that before handover of the first IAB node, the second IAB node has received the first routing configuration and the first bearer mapping configuration between the second IAB node and the source parent node, for example, in a process in which the second IAB node initially accesses a network, the source donor node sends a default UL BAP routing ID and a default UL BH RLC CH identifier by using the RRC reconfiguration message, content of the routing configuration and/or the bearer mapping configuration included in the second configuration information may be considered as the reconfiguration information for the first routing configuration and the first bearer mapping configuration between the second IAB node and the source parent node.

The method provided in any one of the foregoing embodiments of this application may be applied to not only a scenario in which the first IAB node is handed over, but also a scenario in which a parent node and/or a donor node accessed by another first IAB node changes. In a scenario in which a donor node accessed by the first IAB node changes, the first IAB node needs to transmit data and signaling to the donor node through a new transmission path. For example, these scenarios may be a scenario 1 and a scenario 2. In the scenario 1, the first IAB node attempts to perform link recovery after a radio link failure (Radio link failure, RLF) occurs on a backhaul link, selects a cell served by a new parent node during link recovery, and completes an RRC reestablishment process with the donor node by the new parent node. In the scenario 2, when the MT part of the first IAB node enters an RRC inactive (inactive) state and then resumes to an RRC connected state, the MT part of the first IAB node may perform an RRC connection resume (resume) process in a cell served by a new parent node. In these scenarios, the first IAB node may still be connected to a same donor node (that is, the source donor node is the same as the target donor node) through a new transmission path, or may be connected to a new donor node (that is, the source donor node is different from the target donor node).

According to the method provided in any one of the foregoing embodiments of this application, in the handover scenario of the first IAB node, a node that sends the first configuration information to the first IAB node or sends the second configuration information to the second IAB node may be a source donor node, or may be a target donor node. In a link recovery scenario, an RRC connection reestablishment scenario, or an RRC connection resume scenario of the first IAB node, the node may be a target donor node.

In the method provided in any one of the foregoing embodiments of this application, the second uplink routing configuration and the second bearer mapping configuration belong to BAP layer configuration information. The BAP layer configuration information includes routing identifier selection, a routing table configuration, and a bearer mapping configuration at a BAP layer. Specifically, the BAP layer configuration information may include but is not limited to one or more of the following content: a user plane tunnel identifier of an F1 interface to which an uplink data packet belongs; a BAP layer routing identifier corresponding to a user plane tunnel identifier of each F1 interface; egress link bearer information corresponding to a user plane tunnel identifier of each F1 interface; a type of an uplink data packet; a BAP layer routing identifier corresponding to a type of each data packet; egress link bearer information corresponding to a type of each data packet; or an identifier of a next-hop node corresponding to each BAP layer routing identifier.

The user plane tunnel identifier of the F1 interface may be a GTP-U tunnel endpoint identifier, or a combination of an IP address of an uplink target node (for example, may be an IP address of a donor DU, an IP address of a donor CU, an IP address of a donor node, or an IP address of a CU-UP) and a GTP-U tunnel endpoint identifier. The type of the uplink data packet may be, for example, an F1 interface control plane message, an F1 interface control plane message related to a terminal, an F1 interface control plane message not related to a terminal, non-F1 interface data, or a BAP layer control PDU. The egress link bearer information may include wireless backhaul RLC bearer information on one or more egress links. Further, each piece of egress link bearer information herein may be jointly determined by an identifier of a next-hop node and an identifier of a wireless backhaul RLC channel corresponding to a link between the IAB node and the next-hop node.

In the foregoing embodiments of this application, "default" may also be replaced with "default".

In addition to the foregoing embodiments, this application further provides a communication method. The following describes the communication method.

In addition to the scenario in which the IAB node is handed over described in the foregoing embodiments, the IAB node may further update a topology in another case. After the topology is updated, the IAB node needs to transmit data and signaling to an IAB donor node through a new transmission path. For example, the IAB node attempts to perform link recovery after a radio link failure (Radio link failure, RLF) occurs on a backhaul link, selects a cell served by a new parent node during link recovery, and completes an RRC reestablishment process with the IAB donor node through the new parent node. For another example, when an MT part of the IAB node enters an RRC inactive (inactive) state and then resumes to an RRC connected state, the MT part of the IAB node may perform an RRC connection resume (resume) process in a cell served by a new parent node. In these examples of updating the topology, the IAB node may still be connected to a same IAB donor through a new path, or may be connected to a new IAB donor (where the IAB node may be specifically connected to a new IAB donor CU or a new IAB donor CU-CP).

In consideration that an IP address of the IAB node is related to an IAB donor DU to which the IAB node is connected, in these examples of updating the topology, if the IAB donor DU to which the IAB node is connected changes after the topology is updated, the IAB node needs to obtain a new IP address, and establishes a new SCTP association (Association) with an IAB donor CU (which may be specifically an IAB donor CU-CP) by using the new IP address. Then, the IAB node transmits an F1 interface control plane message (namely, an F1AP message, for example, an F1 SETUP REQUEST, or gNB-DU CONFIGURATION UPDATE) between the IAB node and the IAB donor CU by using the new SCTP association. After the F1AP message can be transmitted between the IAB node and the IAB donor CU through an updated new path, the IAB donor CU may send updated BAP layer configuration information, namely, the second uplink routing configuration and the second bearer mapping configuration in step 807, to the IAB node by using the F1AP message.

The BAP layer configuration information may include one or more of the following content: a user plane tunnel identifier of an F1 interface to which an uplink data packet belongs, where the user plane tunnel identifier of the F1 interface may be a GTP-U tunnel endpoint identifier or a combination of an IP address of an uplink target node (which may be an IP address of an IAB-donor-DU, an IP address of an IAB-donor-CU, an IP address of an IAB-donor, an IP address of an IAB-donor CU-UP, or the like) and a GTP-U tunnel endpoint identifier; a BAP layer routing identifier corresponding to a user plane tunnel identifier of each F1 interface; egress link bearer information corresponding to a user plane tunnel identifier of each F1 interface; a type of an uplink data packet (which may be specifically, for example, an F1 interface control plane message, an F1 interface control plane message related to UE, an F1 interface control plane message not related to UE, non-F1 interface data, or a BAP layer control PDU); a BAP layer routing identifier corresponding to a type of each data packet; egress link bearer information corresponding to a type of each data packet; or an identifier of a next-hop node corresponding to each BAP layer routing identifier. The egress link bearer information may include wireless backhaul RLC bearer information on one or more egress links. Further, each piece of egress link bearer information herein may be jointly determined by an identifier of a next-hop node and an identifier of a wireless backhaul RLC channel corresponding to a link between the IAB node and the next-hop node.

However, before the updated BAP layer configuration information is obtained by using the F1AP message transmitted on the new path, a problem that needs to be first resolved is how the IAB node transmits some necessary non-F1 interface (non-F1) messages and F1 interface control plane (F1-C) messages. Transmission of these messages also needs to be processed by the BAP layer. Therefore, transmission of these messages depends on configuration content such as routing configurations and bearer mapping configurations at the BAP layer. In consideration that the IAB node has received configurations at the BAP layer (including routing identifier selection, a routing table configuration, a bearer mapping configuration, and the like at the BAP layer) from the IAB donor node (which may be specifically an IAB donor CU or an IAB donor CU-CP) to which the IAB node is originally connected before completing the topology update. However, these configurations correspond to an old transmission path, and the IAB node cannot use these old configurations to successfully transmit the uplink data (including the foregoing non-F1 message, the foregoing F1-C message, and the like) to the IAB donor node on the new path. The non-F1 interface (non-F1) message, for example, some SCTP messages (Chunks) in which the IAB node establishes an SCTP association with the IAB donor CU by using a new IP address. The F1 interface control plane (F1-C) message, for example, an interface management message related to F1 connection establishment or configuration update, such as an F1 SETUP REQUEST or GNB-DU CONFIGURATION UPDATE.

Similarly, for downstream IAB nodes (which may include a child node of the IAB node, a child node of a child node of the IAB node, or the like) of these IAB nodes where the topology is updated, connection relationships between these IAB nodes and the IAB donor can also be updated with these IAB nodes where the topology is updated. For example, if an IAB node (denoted as an IAB node 1) that performs handover, radio link recovery, or RRC connection resume is migrated from a source parent node to a target parent node, the source parent node is connected to an IAB donor DU 1, and the target parent node is connected to an IAB donor DU 2. The IAB node 1 has a child node IAB node 2, and the IAB node 2 is a downstream node of the IAB node 1 and performs topology update with the IAB node 1. After performing topology update, the IAB node 2 is connected to the IAB donor DU 2 through the IAB node 1. In this case, the IAB node 2 also needs to obtain a new IP address related to the IAB donor DU 2. Similar to the IAB node 1, the IAB node 2 also needs to establish a new SCTP association (Association) with an IAB donor CU (which may be specifically an IAB donor CU-CP) by using a new IP address, and then transmits an F1 interface control plane message between the IAB node and the IAB donor CU by using the new SCTP association. Therefore, the downstream IAB node, like the IAB node 1, needs to resolve a problem that how to transmit some necessary non-F1 interface (non-F1) messages and F1 interface control plane (F1-C) messages before obtaining the updated BAP layer configuration by using the F1AP message.

Therefore, both the IAB nodes that perform handover/radio link recovery/RRC connection resume and the downstream IAB nodes of these IAB nodes face a same problem because topology update occurs. This application provides an embodiment.

In a possible manner, the IAB donor node (which may be specifically the IAB donor CU or the IAB donor CU-CP) sends an X^{th} piece of configuration information to the IAB node (or an IAB-MT). Correspondingly, the IAB node receives the X^{th} piece of configuration information from the IAB donor node. Optionally, the X^{th} piece of configuration information includes: a routing configuration and/or a bearer mapping configuration, and the X^{th} piece of configuration information is used by the IAB node to transmit the uplink data (including, for example, a non-F1 type message and an F1-C type message; and for the downstream node, may alternatively be used to transmit F1-U uplink data) to the IAB donor node through the new transmission path.

In one case, the routing configuration in the X^{th} piece of configuration information includes one UL BAP routing ID. The UL BAP routing ID includes a BAP address (BAP address) and a path identifier (path ID) of a target receiving node of the uplink data. The BAP address of the target receiving node of the uplink data may be a BAP address (specifically, which may alternatively be a BAP address of an IAB donor DU or a BAP address of an IAB donor CU) of the IAB donor node to which the IAB node is connected after topology update occurs. The path identifier is used to identify an uplink path, and the uplink path is a transmission path from the IAB node to the IAB donor node (which may be specifically an IAB donor DU or an IAB donor CU) to which the IAB node is connected after topology update occurs. Optionally, the UL BAP routing ID may be a default/default (Default) UL BAP routing ID. The bearer mapping configuration in the X^{th} piece of configuration information includes a BH RLC channel identifier, a BH RLC channel indicated by the BH RLC channel identifier is a BH RLC channel on a link corresponding to the IAB node and a parent node of the IAB node, the parent node of the IAB node is on a transmission path from the IAB node to the IAB donor node (which may be specifically an IAB donor DU or an IAB donor CU) to which the IAB node is connected after topology update occurs, and the BH RLC channel may be used to carry an uplink data packet sent by the IAB node to the parent node. Optionally, the BH RLC channel may alternatively be a default/default (Default) BH RLC CH. Optionally, the X^{th} piece of configuration information may further include a BAP address of a next-hop node, namely, a BAP address of the parent node of the IAB node. The BAP address of the next-hop node may be combined with the foregoing BH RLC channel identifier, and is used to identify a BH RLC channel on a link between the IAB node and a specified parent node. If the IAB node has only one parent node, or the specified parent node is a parent node corresponding to a master cell group (Master cell group, MCG) of the IAB node, the X^{th} piece of configuration information may not carry the BAP address of the next-hop node. Optionally, the X^{th} piece of configuration information may further include a BAP address allocated to the IAB node, and may be used by the IAB node to determine whether a target node of a received data packet is the IAB node.

Optionally, the X^{th} piece of configuration information is carried in an RRC message sent by the IAB donor node to the IAB node. Optionally, the RRC message carrying the X^{th} piece of configuration information is executed in an RRC connection establishment process, an RRC connection reestablishment process, or an RRC connection resume process between the IAB node and the IAB donor node (which may be specifically an IAB donor CU or an IAB donor CU-CP) (where for example, the X^{th} piece of configuration information is carried in an RRC reestablishment (RRCReestablishment) message, an RRC establishment (RRCSetup) message, or an RRC Resume (RRCResume) message sent by the IAB donor CU to the IAB node), or is executed after an RRC connection establishment process, an RRC connection reestablishment process, or an RRC connection resume process is completed (where for example, the X^{th} piece of configuration information is carried in an RRC reconfiguration message sent by the IAB donor CU to the IAB node).

In consideration that the IAB node has received configurations at the BAP layer (including routing identifier selection, a routing table configuration, a bearer mapping configuration, and the like at the BAP layer; and for details, refer to the foregoing descriptions of the BAP layer configuration information for understanding) from the IAB donor node (which may be specifically an IAB donor CU or an IAB donor CU-CP) to which the IAB node is originally connected before completing the topology update. However, these configurations correspond to an old transmission path (which may be considered as an old BAP layer configuration), and the IAB node cannot use these old configurations to successfully transmit the uplink data (including the foregoing non-F1 message, the foregoing F1-C message, and the like) to the IAB donor node on the new path. The old BAP layer configuration may be a BAP layer configuration sent to the IAB node by using the F1AP message. Therefore, to prevent the IAB node from still using these old BAP layer configurations when transmitting packets on the new path, the IAB node needs to suspend these old BAP layer configurations.

Therefore, the X^{th} piece of configuration information may carry a YYY^{th} piece of indication information, used to indicate the IAB node to suspend (suspend) or release (Release) currently stored BAP layer configurations. For BAP layer configurations in a suspended state, configured content is retained, but data packet processing rules corresponding to these configurations are in an invalid (invalid) state, and the IAB node does not use any rule corresponding to the suspended BAP layer configurations to process a to-be-sent data packet or a received data packet. The YYY^{th} piece of indication information may be explicit indication information (for example, may be 1-bit indication information. If a value is 1, it indicates that the IAB node needs to suspend/release the current BAP layer configuration; or if a value is 0, it indicates that the IAB node does not need to suspend/release the current BAP layer configuration. Alternatively, if the 1-bit indication occurs, it indicates that the IAB node needs to suspend/release the current BAP layer configuration; or if the 1-bit indication does not occur, it indicates that the IAB node does not need to suspend/release the current BAP layer configuration). In another possible manner, the YYY^{th} piece of indication information may alternatively be implicit indication information. For example, if the X^{th} piece of configuration information includes reconfiguration information for a default uplink routing configuration and/or a default bearer mapping configuration, it indicates that the IAB node needs to suspend or release the current BAP layer configuration; otherwise, it indicates that the IAB node does not need to suspend or release the current BAP layer configuration. Specifically, before completing the topology update, the IAB node has received the default uplink routing configuration and/or the default bearer mapping configuration (namely, the foregoing first uplink routing configuration and the foregoing first bearer mapping configuration, for example, the default BAP routing ID and the default BH RLC channel identifier included in the RRC reconfiguration message received from the IAB donor CU in a process in which the second IAB node initially accesses a network). In this case, content of the routing configuration and/or the bearer mapping configuration included in the X^{th} piece of configuration information may be considered as the reconfiguration information for the default uplink routing configuration and/or the default bearer mapping configuration of the IAB node.

In a topology update scenario in which the IAB node performs handover or performs handover with an upstream node (on an uplink transmission path including the IAB node, a node that receives an uplink data packet after the IAB node), the IAB donor node (which may be specifically an IAB donor CU or an IAB donor CU-CP) in this embodiment may be an IAB donor node connected to before the handover, or may be an IAB donor node connected to after the handover. In a topology update scenario in which the IAB node performs link recovery (or RRC connection reestablishment) or performs link recovery (or RRC connection reestablishment) with an upstream node, the IAB donor node may be an IAB donor node connected to after the link recovery succeeds. In a topology update scenario in which the IAB node performs RRC connection resume, the IAB donor node may be an IAB donor node connected to after the RRC connection resume succeeds.

In this way, it can be ensured that after performing topology update, the IAB node may send the uplink data packet of the IAB node by using the routing configuration and/or the bearer mapping configuration in the X^{th} piece of configuration information, to avoid a problem that necessary uplink data or signaling cannot be successfully transmitted because the old BAP layer configuration is still used to process the to-be-sent uplink data packet.

When handover of a migrating IAB node fails, the migrating IAB node and the downstream IAB node need to fall back to the source parent node and the source transmission path for transmission. In this case, the migrating IAB node and the downstream IAB node may resume using the suspended F1AP message to configure the second uplink routing configuration and the second bearer mapping configuration.

The system architecture and application scenarios described in embodiments of this application are intended to describe the technical solution in embodiments of this application more clearly, and do not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

In embodiments of this application, an example in which a provided method is applied to an NR system or a 5G network is used for description. However, it should be noted that the methods provided in embodiments of this application may be further applied to another network, for example, may be applied to an evolved packet system (evolved packet system, EPS) network (namely, a 4G network). Correspondingly, when the methods provided in embodiments of this application are applied to the EPS network, a network node performing the methods provided in embodiments of this application is replaced with a network node in the EPS network. For example, an IAB node may be replaced with an RN, or certainly may have another name. This is not specifically limited in embodiments of this application.

The foregoing mainly describes the solutions in embodiments of this application from a perspective of the methods. It can be understood that, to implement the foregoing functions, a communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely a logical function division. During actual implementation, another division manner may be used.

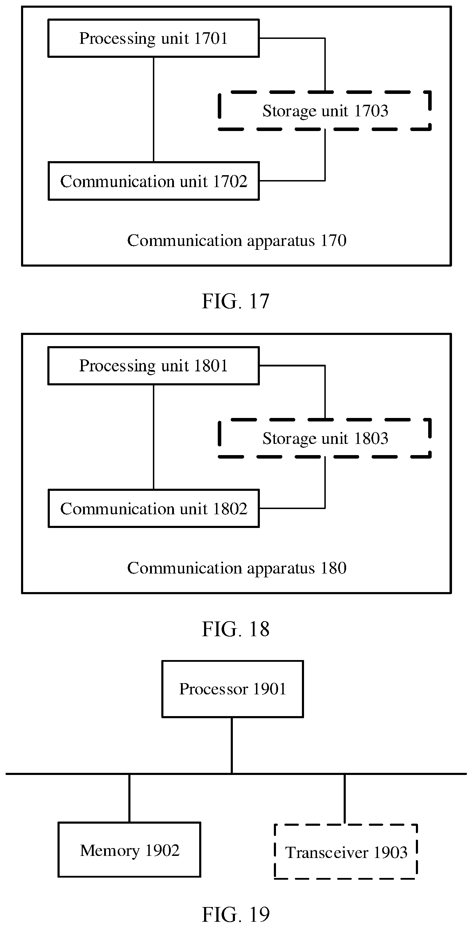

An embodiment of this application provides a communication apparatus (denoted as a communication apparatus 170). As shown in FIG. 17, the communication apparatus includes a processing unit 1701 and a communication unit 1702. Optionally, the communication apparatus further includes a storage unit 1703. The storage unit 1703 is configured to store program code and data of the communication apparatus 170.

In one case, the processing unit 1701 is configured to perform the following actions through the communication unit 1702:
receiving configuration information from a source donor node through a source parent node, where the configuration information includes: a routing configuration and/or a bearer mapping configuration, the configuration information is used by the communication apparatus to perform transmission of uplink data with a target donor node through a target parent node, the source donor node is a donor node accessed by the source parent node, and the target donor node is a donor node accessed by the target parent node; and
in a process in which the communication apparatus is handed over from the source parent node to the target parent node, sending the uplink data to the target donor node by using the configuration information through the target parent node.

Optionally, the configuration information further includes indication information, the indication information is used to indicate to suspend the routing configuration and/or the bearer mapping configuration in the configuration information, and the processing unit 1701 is further configured to suspend the routing configuration and/or the bearer mapping configuration in the configuration information based on the indication information.

Optionally, after the communication apparatus establishes an RRC connection to the target parent node, the processing unit 1701 is further configured to make the routing configuration and/or the bearer mapping configuration in the configuration information take effect.

Optionally, the processing unit 1701 is further configured to release or suspend the routing configuration and the bearer mapping configuration between the processing unit 1701 and the source parent node.

Optionally, the source donor node and the target donor node are a same node; or the source donor node and the target donor node are different nodes.

Optionally, the routing configuration in the configuration information includes an uplink BAP routing identifier, the uplink BAP routing identifier is used to identify an uplink path, and the uplink path includes the target parent node and the target donor node.

Optionally, the bearer mapping configuration in the configuration information includes an uplink backhaul RLC channel identifier.

Optionally, the configuration information is carried in an RRC message or an F1AP message.

In another case, the processing unit 1701 is configured to perform the following actions through the communication unit 1702:
receiving second configuration information from a source donor node through a source parent node; and in a process in which a first IAB node is handed over from the source parent node to a target parent node, sending uplink data to a target donor node by using the second configuration information through the target parent node. The communication apparatus is a downstream node of the first IAB node, the source parent node is a donor node accessed by the first IAB node before handover, the second configuration information includes: a routing configuration and/or a bearer mapping configuration, the second configuration information is used by the communication apparatus to perform transmission of the uplink data with the target donor node through the target parent node, the target parent node is a node accessed by the first IAB node after handover, the source donor node is a donor node accessed by the source parent node, and the target donor node is a donor node accessed by the target parent node.

Optionally, the second configuration information further includes second indication information, the second indication information is used to indicate to release or suspend the routing configuration and the bearer mapping configuration between the communication apparatus and the source parent node, and the processing unit 1701 is further configured to release or suspend the routing configuration and the bearer mapping configuration between the communication apparatus and the source parent node based on the second indication information.

Optionally, the source donor node and the target donor node are a same node; or the source donor node and the target donor node are different nodes.

Optionally, the second routing configuration in the configuration information includes an uplink BAP routing identifier, the uplink BAP routing identifier is used to identify an uplink path, and the uplink path includes the target parent node and the target donor node.

Optionally, the bearer mapping configuration in the second configuration information includes an uplink backhaul RLC channel identifier.

Optionally, the second configuration information is carried in an RRC message or an F1AP message.

An embodiment of this application further provides a communication apparatus (denoted as a communication apparatus 180). As shown in FIG. 18, the communication apparatus includes a processing unit 1801 and a communication unit 1802. Optionally, the communication apparatus further includes a storage unit 1803. The storage unit 1803 is configured to store program code and data of the communication apparatus 180.

In one case, the processing unit 1801 is configured to perform the following actions through the communication unit 1802:
receiving a measurement report from an IAB node (or an IAB-MT), and determining, based on the measurement report, to hand over the IAB node (or the IAB-MT) from a source parent node to a target parent node, where the communication apparatus is a donor node accessed by the source parent node; and
sending configuration information to the IAB node (or the IAB-MT) through the source parent node, where the configuration information includes: a routing configuration and/or a bearer mapping configuration, the configuration information is used by the IAB node (or the IAB-MT) to perform transmission of uplink data with a target donor node through the target parent node, and the target donor node is a donor node accessed by the target parent node.

Optionally, the configuration information further includes indication information, and the indication information is used to indicate to suspend the routing configuration and/or the bearer mapping configuration in the configuration information.

Optionally, the communication apparatus and the target donor node are a same node.

Optionally, the communication apparatus and the target donor node are different nodes, and the processing unit 1801 is further configured to receive the configuration information from the target donor node through the communication unit 1802.

Optionally, the configuration information is carried in a handover response.

Optionally, the routing configuration includes an uplink BAP routing identifier, the uplink BAP routing identifier is used to identify an uplink path, and the uplink path includes the target parent node and the target donor node.

Optionally, the bearer mapping configuration includes an uplink backhaul RLC channel identifier.

Optionally, the configuration information is carried in an RRC message or an F1AP message.

In another case, the communication unit 1802 is configured to receive a measurement report from a first IAB node, the processing unit 1801 is configured to determine, based on the measurement report, to hand over the first IAB node from a source parent node to a target parent node, and the communication unit 1802 is further configured to send second configuration information to a second IAB node through the source parent node. The first IAB node is handed over from the source parent node to the target parent node, the second IAB node is a downstream node of the first IAB node, the communication apparatus is a donor node accessed by the source parent node, a target donor node is a donor node accessed by the target parent node, the second configuration information includes: a routing configuration and/or a bearer mapping configuration, and the second configuration information is used by the second IAB node to perform transmission of uplink data with the target donor node through the target parent node.

Optionally, the second configuration information further includes second indication information, and the second indication information is used to indicate to release or suspend the routing configuration and the bearer mapping configuration between the second IAB node and the source parent node.

Optionally, the communication apparatus and the target donor node are a same node.

Optionally, the communication apparatus and the target donor node are different nodes, and the communication unit 1802 is further configured to receive the second configuration information from the target donor node.

Optionally, the second configuration information is carried in a handover response.

Optionally, the routing configuration includes an uplink BAP routing identifier, the uplink BAP routing identifier is used to identify an uplink path, and the uplink path includes the target parent node and the target donor node.

Optionally, the bearer mapping configuration includes an uplink backhaul RLC channel identifier.

Optionally, the second configuration information is carried in an RRC message or an F1AP message.

The communication apparatus 170 and the communication apparatus 180 may be network devices, or may be chips in network devices. For example, the communication apparatus 170 may be an IAB node or a chip in an IAB node. The communication apparatus 180 may be a source donor node or a chip in a source donor node.

The units in FIG. 17 and FIG. 18 may also be referred to as modules. For example, the processing unit may be referred to as a processing module. In addition, in the embodiments shown in FIG. 17 and FIG. 18, names of the units may not be names shown in the figures. For example, the communication unit may also be referred to as a transceiver unit.

When the units in FIG. 17 and FIG. 18 are implemented in a form of software functional modules and sold or used as independent products, the units may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

Embodiments of this application further provide a schematic diagram of a hardware structure of a communication apparatus. Refer to FIG. 19 or FIG. 20. The communication apparatus includes a processor 1901, and optionally further includes a memory 1902 connected to the processor 1901.

The processor 1901 may be a general-purpose central processing unit (central processing unit, CPU), a microprocessor, an application-specific integrated circuit (application-specific integrated circuit, ASIC), or one or more integrated circuits configured to control program execution of the solutions in this application. The processor 1901 may further include a plurality of CPUs, and the processor 1901 may be a single-core (single-CPU) processor or a multi-core (multi-CPU) processor. The processor herein may refer to one or more devices, circuits, or processing cores configured to process data (for example, computer program instructions).

The memory 1902 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. This is not limited in embodiments of this application. The memory 1902 may independently exist, or may be integrated with the processor 1901. The memory 1902 may include computer program code. The processor 1901 is configured to execute the computer program code stored in the memory 1902, to implement the methods provided in embodiments of this application.

For a first possible implementation, refer to FIG. 19. The communication apparatus further includes a transceiver 1903. The processor 1901, the memory 1902, and the transceiver 1903 are connected through a bus. The transceiver 1903 is configured to communicate with another communication device. Optionally, the transceiver 1903 may include a transmitter machine and a receiver machine. A component configured to implement a receiving function in the transceiver 1903 may be considered as a receiver machine. The receiver machine is configured to perform a receiving step in embodiments of this application. A component configured to implement a sending function in the transceiver 1903 may be considered as a transmitter machine. The transmitter machine is configured to perform a sending step in embodiments of this application.

Based on the first possible implementation, the schematic diagram of the structure shown in FIG. 19 may be used to illustrate a structure of the IAB node in the foregoing embodiments. The processor 1901 is configured to control and manage an action of the IAB node. For example, the processor 1901 is configured to support the IAB node in performing 1001, 1003, and 1004 in FIG. 10, 1101 to 1108 in FIG. 11, 1401 to 1410 in FIG. 14, 2101, 2103, and 2104 in FIG. 21 (where in this case, the IAB node is the first IAB node), and 2103 and 2104 in FIG. 21 (where in this case, the IAB node is the second IAB node); and/or an action performed by the IAB node in another process described in embodiments of this application. The processor 1901 may communicate with another communication device through the transceiver 1903, for example, communicate with the donor node in FIG. 10. The memory 1902 is configured to store program code and data of the IAB node.

Based on the first possible implementation, the schematic diagram of the structure shown in FIG. 19 may be used to illustrate a structure of the source donor node in the foregoing embodiments. The processor 1901 is configured to control and manage an action of the source donor node. For example, the processor 1901 is configured to support the source donor node in performing 1001 to 1003 in FIG. 10, 1101 to 1103 and 1106 to 1108 in FIG. 11 (where in this case, the source donor node is the donor node in FIG. 11), 1401 to 1405 in FIG. 14, and 2101 to 2104 in FIG. 21; and/or an action performed by the source donor node in another process described in embodiments of this application. The processor 1901 may communicate with another communication device through the transceiver 1903, for example, communicate with the IAB node in FIG. 10. The memory 1902 is configured to store program code and data of the source donor node.

In a second possible implementation, the processor 1901 includes a logic circuit and an input interface and/or an output interface. The output interface is configured to perform a sending action in a corresponding method, and the input interface is configured to perform a receiving action in the corresponding method.

Based on the second possible implementation, the schematic diagram of the structure shown in FIG. 20 may be used to illustrate a structure of the IAB node in the foregoing embodiments. The processor 1901 is configured to control and manage an action of the IAB node. For example, the processor 1901 is configured to support the IAB node in performing 1001, 1003, and 1004 in FIG. 10, 1101 to 1108 in FIG. 11, 1401 to 1410 in FIG. 14, 2101, 2103, and 2104 in FIG. 21 (where in this case, the IAB node is the first IAB node), and 2103 and 2104 in FIG. 21 (where in this case, the IAB node is the second IAB node); and/or an action performed by the IAB node in another process described in embodiments of this application. The processor 1901 may communicate with another communication device through an input interface and/or an output interface, for example, communicate with the source donor node in FIG. 10. The memory 1902 is configured to store program code and data of the IAB node.

Based on the second possible implementation, the schematic diagram of the structure shown in FIG. 20 may be used to illustrate a structure of the source donor node in the foregoing embodiments. The processor 1901 is configured to control and manage an action of the source donor node. For example, the processor 1901 is configured to support the source donor node in performing 1001 to 1003 in FIG. 10, 1101 to 1103 and 1106 to 1108 in FIG. 11 (where in this case, the source donor node is the donor node in FIG. 11), 1401 to 1405 in FIG. 14, and 2101 to 2104 in FIG. 21; and/or an action performed by the source donor node in another process described in embodiments of this application. The processor 1901 may communicate with another communication device through an input interface and/or an output interface, for example, communicate with the IAB node in FIG. 10. The memory 1902 is configured to store program code and data of the source donor node.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a chip. The chip includes a processor and an interface. The processor is coupled to a memory through the interface. When the processor executes a computer program or instructions in the memory, any method provided in the foregoing embodiments is performed.

An embodiment of this application further provides a communication system. The communication system includes the source donor node and the IAB node in the foregoing embodiments. Optionally, the method further includes one or more of a source parent node, a target parent node, and a target donor node.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD for short)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, comprising:
receiving, by an integrated access and backhaul IAB node, configuration information from a source donor node through a source parent node of a migrating IAB node, wherein the configuration information comprises: a routing configuration and/or a bearer mapping configuration, the configuration information is used by the IAB node to perform transmission of uplink data with a target donor node through a target parent node of the migrating IAB node, the source donor node is a donor node accessed by the source parent node, the target donor node is a donor node accessed by the target parent node of the migrating IAB node, and the IAB node is a downstream node of the migrating IAB node; and
in a process in which the IAB node is handed over from the source parent node of the migrating IAB node to the target parent node of the migrating IAB node, sending, by the IAB node, the uplink data to the target donor node by using the configuration information through the target parent node of the migrating IAB node.

2. The method according to claim 1, wherein the configuration information further comprises indication information, the indication information is used to indicate to suspend the routing configuration and/or the bearer mapping configuration in the configuration information, and the method further comprises:
suspending, by the IAB node, the routing configuration and/or the bearer mapping configuration in the configuration information based on the indication information.

3. The method according to claim 2, wherein after the IAB node establishes a radio resource control RRC connection to the target donor node through the target parent node of the migrating IAB node, the method further comprises:
making, by the IAB node, the routing configuration and/or the bearer mapping configuration in the configuration information take effect.

4. The method according to claim 3, wherein the method further comprises:
releasing or suspending, by the IAB node, the routing configuration and the bearer mapping configuration between the IAB node and the source parent node of the migrating IAB node.

5. The method according to any one of claims 1 to 4, wherein the source donor node and the target donor node are a same node; or the source donor node and the target donor node are different nodes.

6. The method according to any one of claims 1 to 5, wherein the routing configuration in the configuration information comprises an uplink backhaul adaptation protocol BAP routing identifier, the uplink BAP routing identifier is used to identify an uplink path, and the uplink path comprises the target parent node and the target donor node.

7. The method according to any one of claims 1 to 6, wherein the bearer mapping configuration in the configuration information comprises an uplink backhaul radio link control RLC channel identifier.

8. The method according to any one of claims 1 to 7, wherein the configuration information is carried in an RRC message or an F1 application protocol F1AP message.

9. The method according to any one of claims 1 to 8, wherein the source parent node and the source donor node of the migrating IAB node are a same node or different nodes.

10. The method according to any one of claims 1 to 9, wherein the target parent node and the target donor node of the migrating IAB node are a same node or different nodes.

11. The method according to any one of claims 1 to 10, wherein the uplink data comprises uplink user plane data and/or uplink control plane data.

12. The method according to any one of claims 1 to 11, wherein the uplink data comprises a non-F1 interface message and/or an F1 interface control plane message.

13. A communication method, comprising:
receiving, by a source donor node, a measurement report from an integrated access and backhaul IAB node, and determining, based on the measurement report, to hand over the IAB node from a source parent node of a migrating IAB node to a target parent node of the migrating IAB node, wherein the source donor node is a donor node accessed by the source parent node of the migrating IAB node, and the IAB node is a downstream node of the migrating IAB node; and
sending, by the source donor node, configuration information to the IAB node through the source parent node of the migrating IAB node, wherein the configuration information comprises: a routing configuration and/or a bearer mapping configuration, the configuration information is used by the IAB node to perform transmission of uplink data with a target donor node through the target parent node of the migrating IAB node, and the target donor node is a donor node accessed by the target parent node of the migrating IAB node.

14. The method according to claim 13, wherein the configuration information further comprises indication information, and the indication information is used to indicate to suspend the routing configuration and/or the bearer mapping configuration in the configuration information.

15. The method according to claim 13 or 14, wherein the receiving, by a source donor node, a measurement report from an IAB node comprises:
receiving, by the source donor node, the measurement report from the IAB node through the source parent node of the migrating IAB node.

16. The method according to any one of claims 13 to 15, wherein the source donor node and the target donor node are a same node.

17. The method according to any one of claims 13 to 15, wherein the source donor node and the target donor node are different nodes, and the method further comprises:
receiving, by the source donor node, the configuration information from the target donor node.

18. The method according to claim 17, wherein the configuration information is carried in a handover response.

19. The method according to any one of claims 13 to 18, wherein the routing configuration comprises an uplink backhaul adaptation protocol BAP routing identifier, the uplink BAP routing identifier is used to identify an uplink path, and the uplink path comprises the target parent node and the target donor node of the migrating IAB node.

20. The method according to any one of claims 13 to 19, wherein the bearer mapping configuration comprises an uplink backhaul radio link control RLC channel identifier.

21. The method according to any one of claims 13 to 20, wherein the configuration information is carried in a radio resource control RRC message or an F1 application protocol F1AP message.

22. The method according to any one of claims 13 to 21, wherein the source parent node and the source donor node of the migrating IAB node are a same node or different nodes.

23. The method according to any one of claims 13 to 22, wherein the target parent node and the target donor node of the migrating IAB node are a same node or different nodes.

24. The method according to any one of claims 13 to 23, wherein the uplink data comprises uplink user plane data and/or uplink control plane data.

25. The method according to any one of claims 13 to 24, wherein the uplink data comprises a non-F1 interface message and/or an F1 interface control plane message.

26. A communication method, comprising:
receiving, by a target donor node, a handover request from a source donor node, wherein the handover request is used to request an integrated access and backhaul IAB node to be handed over from a source parent node of a migrating IAB node to a target parent node of the migrating IAB node, the source donor node is a donor node accessed by the source parent node of the migrating IAB node, the target donor node is a donor node accessed by the target parent node of the migrating IAB node, and the IAB node is a downstream node of the migrating IAB node; and
sending, by the target donor node, a handover response to the source donor node based on the handover request, wherein the handover response comprises configuration information, the configuration information comprises: a routing configuration and/or a bearer mapping configuration, and the configuration information is used by the IAB node to perform transmission of uplink data with the target donor node through the target parent node of the migrating IAB node.

27. The method according to claim 26, wherein the routing configuration comprises an uplink backhaul adaptation protocol BAP routing identifier, the uplink BAP routing identifier is used to identify an uplink path, and the uplink path comprises the target parent node and the target donor node of the migrating IAB node.

28. The method according to claim 26 or 27, wherein the bearer mapping configuration comprises an uplink backhaul radio link control RLC channel identifier.

29. A communication apparatus, comprising a processing unit and a communication unit, wherein the processing unit is configured to perform the following actions through the communication unit:
receiving configuration information from a source donor node through a source parent node of a migrating integrated access and backhaul IAB node, wherein the configuration information comprises: a routing configuration and/or a bearer mapping configuration, the configuration information is used by the communication apparatus to perform transmission of uplink data with a target donor node through a target parent node of the migrating IAB node, the source donor node is a donor node accessed by the source parent node of the migrating IAB node, the target donor node is a donor node accessed by the target parent node of the migrating IAB node, and the communication apparatus is a downstream node of the migrating IAB node or an apparatus in a downstream node of the migrating IAB node; and
in a process in which the communication apparatus is handed over from the source parent node of the migrating IAB node to the target parent node of the migrating IAB node, sending the uplink data to the target donor node by using the configuration information through the target parent node of the migrating IAB node.

30. The communication apparatus according to claim 29, wherein the configuration information further comprises indication information, the indication information is used to indicate to suspend the routing configuration and/or the bearer mapping configuration in the configuration information, and the processing unit is further configured to:
suspend the routing configuration and/or the bearer mapping configuration in the configuration information based on the indication information.

31. The communication apparatus according to claim 30, wherein the processing unit is further configured to:
make the routing configuration and/or the bearer mapping configuration in the configuration information take effect.

32. The communication apparatus according to claim 31, wherein the processing unit is further configured to:
release or suspend the routing configuration and the bearer mapping configuration between the processing unit and the source parent node of the migrating IAB node.

33. The communication apparatus according to any one of claims 29 to 32, wherein the source donor node and the target donor node are a same node; or the source donor node and the target donor node are different nodes.

34. The communication apparatus according to any one of claims 29 to 33, wherein the routing configuration in the configuration information comprises an uplink backhaul adaptation protocol BAP routing identifier, the uplink BAP routing identifier is used to identify an uplink path, and the uplink path comprises the target parent node and the target donor node of the migrating IAB node.

35. The communication apparatus according to any one of claims 29 to 34, wherein the bearer mapping configuration in the configuration information comprises an uplink backhaul radio link control RLC channel identifier.

36. The communication apparatus according to any one of claims 29 to 35, wherein the configuration information is carried in an RRC message or an F1 application protocol F1AP message.

37. The communication apparatus according to any one of claims 29 to 36, wherein the source parent node and the source donor node of the migrating IAB node are a same node or different nodes.

38. The communication apparatus according to any one of claims 29 to 37, wherein the target parent node and the target donor node of the migrating IAB node are a same node or different nodes.

39. The communication apparatus according to any one of claims 29 to 38, wherein the uplink data comprises uplink user plane data and/or uplink control plane data.

40. The communication apparatus according to any one of claims 29 to 39, wherein the uplink data comprises a non-F1 interface message and/or an F1 interface control plane message.

41. A communication apparatus, comprising a processing unit and a communication unit, wherein the processing unit is configured to perform the following actions through the communication unit:
receiving a measurement report from an integrated access and backhaul IAB node, and determining, based on the measurement report, to hand over the IAB node from a source parent node of a migrating IAB node to a target parent node of the migrating IAB node, wherein the communication apparatus is a donor node accessed by the source parent node of the migrating IAB node or an apparatus in a donor node accessed by the source parent node of the migrating IAB node; and
sending configuration information to the IAB node through the source parent node, wherein the configuration information comprises: a routing configuration and/or a bearer mapping configuration, the configuration information is used by the IAB node to perform transmission of uplink data with a target donor node through the target parent node of the migrating IAB node, and the target donor node is a donor node accessed by the target parent node of the migrating IAB node.

42. The communication apparatus according to claim 41, wherein the configuration information further comprises indication information, and the indication information is used to indicate to suspend the routing configuration and/or the bearer mapping configuration in the configuration information.

43. The communication apparatus according to claim 41 or 42, wherein the processing unit is specifically configured to perform the following action through the communication unit:
receiving the measurement report from the IAB node through the source parent node of the migrating IAB node.

44. The communication apparatus according to any one of claims 41 to 43, wherein the communication apparatus and the target donor node are a same node.

45. The communication apparatus according to any one of claims 41 to 43, wherein the communication apparatus and the target donor node are different nodes, and the processing unit is specifically configured to perform the following action through the communication unit:
receiving the configuration information from the target donor node.

46. The communication apparatus according to claim 45, wherein the configuration information is carried in a handover response.

47. The communication apparatus according to any one of claims 41 to 46, wherein the routing configuration comprises an uplink backhaul adaptation protocol BAP routing identifier, the uplink BAP routing identifier is used to identify an uplink path, and the uplink path comprises the target parent node and the target donor node of the migrating IAB node.

48. The communication apparatus according to any one of claims 41 to 47, wherein the bearer mapping configuration comprises an uplink backhaul radio link control RLC channel identifier.

49. The communication apparatus according to any one of claims 41 to 48, wherein the configuration information is carried in a radio resource control RRC message or an F1 application protocol F1AP message.

50. The communication apparatus according to any one of claims 41 to 49, wherein the source parent node of the migrating IAB node and the communication apparatus are a same node or different nodes, or the source parent node of the migrating IAB node and a node comprising the communication apparatus are a same node or different nodes.

51. The communication apparatus according to any one of claims 41 to 50, wherein the target parent node and the target donor node of the migrating IAB node are a same node or different nodes.

52. The communication apparatus according to any one of claims 41 to 51, wherein the uplink data comprises uplink user plane data and/or uplink control plane data.

53. The communication apparatus according to any one of claims 41 to 52, wherein the uplink data comprises a non-F1 interface message and/or an F1 interface control plane message.

54. A communication apparatus, comprising a processing unit and a communication unit, wherein the processing unit is configured to perform the following actions through the communication unit:
receiving a handover request from a source donor node, wherein the handover request is used to request an integrated access and backhaul IAB node to be handed over from a source parent node of a migrating IAB node to a target parent node of the migrating IAB node, the source donor node is a donor node accessed by the source parent node of the migrating IAB node, the communication apparatus is a donor node accessed by the target parent node of the migrating IAB node or an apparatus in a donor node accessed by the target parent node of the migrating IAB node, and the IAB node is a downstream node of the migrating IAB node; and
sending a handover response to the source donor node based on the handover request, wherein the handover response comprises configuration information, the configuration information comprises: a routing configuration and/or a bearer mapping configuration, and the configuration information is used by the IAB node to perform transmission of uplink data with the communication apparatus through the target parent node of the migrating IAB node.

55. The communication apparatus according to claim 54, wherein the routing configuration comprises an uplink backhaul adaptation protocol BAP routing identifier, the uplink BAP routing identifier is used to identify an uplink path, and the uplink path comprises the target parent node of the migrating IAB node and the communication apparatus.

56. The communication apparatus according to claim 54 or 55, wherein the bearer mapping configuration comprises an uplink backhaul radio link control RLC channel identifier.

57. A communication method, comprising:
receiving, by a second integrated access and backhaul IAB node, second configuration information from a source donor node through a source parent node, wherein the second configuration information comprises: a routing configuration and/or a bearer mapping configuration, the second configuration information is used by the second IAB node to perform transmission of uplink data with a target donor node through a target parent node, the second IAB node is a downstream node of a first IAB node, the source parent node is a node accessed by the first IAB node before handover, the source donor node is a donor node accessed by the source parent node, the target parent node is a node accessed by the first IAB node after handover, and the target donor node is a donor node accessed by the target parent node; and
in a process in which the first IAB node is handed over from the source parent node to the target parent node, sending, by the second IAB node, the uplink data to the target donor node by using the second configuration information through the target parent node.

58. The method according to claim 57, wherein the second configuration information further comprises second indication information, the second indication information is used to indicate to release or suspend the routing configuration and the bearer mapping configuration between the second IAB node and the source parent node, and the method further comprises:
releasing or suspending, by the second IAB node, the routing configuration and the bearer mapping configuration between the second IAB node and the source parent node based on the second indication information.

59. The method according to claim 57 or 58, wherein the source donor node and the target donor node are a same node; or the source donor node and the target donor node are different nodes.

60. The method according to any one of claims 57 to 59, wherein the routing configuration in the second configuration information comprises an uplink backhaul adaptation protocol BAP routing identifier, the uplink BAP routing identifier is used to identify an uplink path, and the uplink path comprises the target parent node and the target donor node.

61. The method according to any one of claims 57 to 60, wherein the bearer mapping configuration in the second configuration information comprises an uplink backhaul radio link control RLC channel identifier.

62. The method according to any one of claims 57 to 61, wherein the second configuration information is carried in a radio resource control RRC message or an F1 application protocol F1AP message.

63. A communication method, comprising:
receiving, by a source donor node, a measurement report from a first integrated access and backhaul IAB node, wherein the source donor node is a donor node accessed by a source parent node, and the first IAB node is handed over from the source parent node to a target parent node;
determining, by the source donor node based on the measurement report, to hand over the first IAB node from the source parent node to the target parent node; and
sending, by the source donor node, second configuration information to a second IAB node through the source parent node, wherein the second IAB node is a downstream node of the first IAB node, the second configuration information comprises: a routing configuration and/or a bearer mapping configuration, the second configuration information is used by the second IAB node to perform transmission of uplink data with a target donor node through the target parent node, and the target donor node is a donor node accessed by the target parent node.

64. The method according to claim 63, wherein the second configuration information further comprises second indication information, and the second indication information is used to indicate to release or suspend the routing configuration and the bearer mapping configuration between the second IAB node and the source parent node.

65. The method according to claim 63 or 64, wherein the source donor node and the target donor node are a same node.

66. The method according to claim 63 or 64, wherein the source donor node and the target donor node are different nodes, and the method further comprises:
receiving, by the source donor node, the second configuration information from the target donor node.

67. The method according to claim 66, wherein the second configuration information is carried in a handover response.

68. The method according to any one of claims 63 to 67, wherein the routing configuration in the second configuration information comprises an uplink backhaul adaptation protocol BAP routing identifier, the uplink BAP routing identifier is used to identify an uplink path, and the uplink path comprises the target parent node and the target donor node.

69. The method according to any one of claims 63 to 68, wherein the bearer mapping configuration in the second configuration information comprises an uplink backhaul radio link control RLC channel identifier.

70. The method according to any one of claims 63 to 69, wherein the second configuration information is carried in a radio resource control RRC message or an F1 application protocol F1AP message.

71. A communication method, comprising:
receiving, by a target donor node, a handover request from a source donor node, wherein the handover request is used to request a second integrated access and backhaul IAB node to be handed over from a source parent node to a target parent node with a first IAB node, the source donor node is a donor node accessed by the source parent node, and the target donor node is a donor node accessed by the target parent node; and
sending, by the target donor node, a handover response to the source donor node based on the handover request, wherein the handover response comprises second configuration information, the second configuration information comprises: a routing configuration and/or a bearer mapping configuration, the second configuration information is used by the second IAB node to perform transmission of uplink data with the target donor node through the target parent node, and the second IAB node is a downstream node of the first IAB node.

72. The method according to claim 71, wherein the routing configuration in the second configuration information comprises an uplink backhaul adaptation protocol BAP routing identifier, the uplink BAP routing identifier is used to identify an uplink path, and the uplink path comprises the target parent node and the target donor node.

73. The method according to claim 71 or 72, wherein the bearer mapping configuration in the second configuration information comprises an uplink backhaul radio link control RLC channel identifier.

74. A communication apparatus, comprising a communication unit and a processing unit, wherein the processing unit is configured to perform the following actions through the communication unit:
receiving second configuration information from a source donor node through a source parent node, wherein the second configuration information comprises: a routing configuration and/or a bearer mapping configuration, the second configuration information is used by the communication apparatus to perform transmission of uplink data with a target donor node through a target parent node, the communication apparatus is a downstream node of a first integrated access and backhaul IAB node or an apparatus in a downstream node of a first IAB node, the source parent node is a node accessed by the first IAB node before handover, the source donor node is a donor node accessed by the source parent node, the target parent node is a node accessed by the first IAB node after handover, and the target donor node is a donor node accessed by the target parent node; and
in a process in which the first IAB node is handed over from the source parent node to the target parent node, sending the uplink data to the target donor node by using the second configuration information through the target parent node.

75. The communication apparatus according to claim 74, wherein the second configuration information further comprises second indication information, the second indication information is used to indicate to release or suspend the routing configuration and the bearer mapping configuration between the communication apparatus and the source parent node, and the processing unit is further configured to:
release or suspend the routing configuration and the bearer mapping configuration between the communication apparatus and the source parent node based on the second indication information.

76. The communication apparatus according to claim 74 or 75, wherein the source donor node and the target donor node are a same node; or the source donor node and the target donor node are different nodes.

77. The communication apparatus according to any one of claims 74 to 76, wherein the routing configuration in the second configuration information comprises an uplink backhaul adaptation protocol BAP routing identifier, the uplink BAP routing identifier is used to identify an uplink path, and the uplink path comprises the target parent node and the target donor node.

78. The communication apparatus according to any one of claims 74 to 77, wherein the bearer mapping configuration in the second configuration information comprises an uplink backhaul radio link control RLC channel identifier.

79. The communication apparatus according to any one of claims 74 to 78, wherein the second configuration information is carried in a radio resource control RRC message or an F1 application protocol F1AP message.

80. A communication apparatus, comprising a communication unit and a processing unit, wherein
the communication unit is configured to receive a measurement report from a first integrated access and backhaul IAB node, wherein the communication apparatus is a donor node accessed by a source parent node or an apparatus in a donor node accessed by a source parent node, and the first IAB node is handed over from the source parent node to a target parent node;
the processing unit is configured to determine, based on the measurement report, to hand over the first IAB node from the source parent node to the target parent node; and
the communication unit is further configured to send second configuration information to a second IAB node through the source parent node, wherein the second IAB node is a downstream node of the first IAB node, the second configuration information comprises: a routing configuration and/or a bearer mapping configuration, the second configuration information is used by the second IAB node to perform transmission of uplink data with a target donor node through the target parent node, and the target donor node is a donor node accessed by the target parent node.

81. The communication apparatus according to claim 80, wherein the second configuration information further comprises second indication information, and the second indication information is used to indicate to release or suspend the routing configuration and the bearer mapping configuration between the second IAB node and the source parent node.

82. The communication apparatus according to claim 80 or 81, wherein the communication apparatus and the target donor node are a same node.

83. The communication apparatus according to claim 80 or 81, wherein the communication apparatus and the target donor node are different nodes, and the communication unit is further configured to:
receive the second configuration information from the target donor node.

84. The communication apparatus according to claim 83, wherein the second configuration information is carried in a handover response.

85. The communication apparatus according to any one of claims 80 to 84, wherein the routing configuration in the second configuration information comprises an uplink backhaul adaptation protocol BAP routing identifier, the uplink BAP routing identifier is used to identify an uplink path, and the uplink path comprises the target parent node and the target donor node.

86. The communication apparatus according to any one of claims 80 to 85, wherein the bearer mapping configuration in the second configuration information comprises an uplink backhaul radio link control RLC channel identifier.

87. The communication apparatus according to any one of claims 80 to 86, wherein the second configuration information is carried in a radio resource control RRC message or an F1 application protocol F1AP message.

88. A communication apparatus, comprising a communication unit and a processing unit, wherein the processing unit is configured to perform the following actions through the communication unit:
receiving a handover request from a source donor node, wherein the handover request is used to request a second integrated access and backhaul IAB node to be handed over from a source parent node to a target parent node with a first IAB node, the source donor node is a donor node accessed by the source parent node, and the communication apparatus is a donor node accessed by the target parent node or an apparatus in a donor node accessed by the target parent node; and
sending a handover response to the source donor node based on the handover request, wherein the handover response comprises second configuration information, the second configuration information comprises: a routing configuration and/or a bearer mapping configuration, the second configuration information is used by the second IAB node to perform transmission of uplink data with the communication apparatus through the target parent node, and the second IAB node is a downstream node of the first IAB node.

89. The communication apparatus according to claim 88, wherein the routing configuration in the second configuration information comprises an uplink backhaul adaptation protocol BAP routing identifier, the uplink BAP routing identifier is used to identify an uplink path, and the uplink path comprises the target parent node and the communication apparatus.

90. The communication apparatus according to claim 88 or 89, wherein the bearer mapping configuration in the second configuration information comprises an uplink backhaul radio link control RLC channel identifier.

91. A communication apparatus, comprising a functional unit configured to perform the method according to any one of claims 1 to 12, or a functional unit configured to perform the method according to any one of claims 57 to 62, wherein an action performed by the functional unit is implemented by hardware or implemented by hardware executing corresponding software.

92. A communication apparatus, comprising a functional unit configured to perform the method according to any one of claims 13 to 25, or a functional unit configured to perform the method according to any one of claims 63 to 70, wherein an action performed by the functional unit is implemented by hardware or implemented by hardware executing corresponding software.

93. A communication apparatus, comprising a functional unit configured to perform the method according to any one of claims 26 to 28, or a functional unit configured to perform the method according to any one of claims 71 to 73, wherein an action performed by the functional unit is implemented by hardware or implemented by hardware executing corresponding software.

94. A communication apparatus, comprising a processor, wherein
the processor is connected to a memory, the memory is configured to store computer-executable instructions, and the processor executes the computer-executable instructions stored in the memory, to enable the communication apparatus to implement the method according to any one of claims 1 to 12, or implement the method according to any one of claims 57 to 62.

95. A communication apparatus, comprising a processor, wherein
the processor is connected to a memory, the memory is configured to store computer-executable instructions, and the processor executes the computer-executable instructions stored in the memory, to enable the communication apparatus to implement the method according to any one of claims 13 to 25, or implement the method according to any one of claims 63 to 70.

96. A communication apparatus, comprising a processor, wherein
the processor is connected to a memory, the memory is configured to store computer-executable instructions, and the processor executes the computer-executable instructions stored in the memory, to enable the communication apparatus to implement the method according to any one of claims 26 to 28, or implement the method according to any one of claims 71 to 73.

97. A computer-readable storage medium, comprising instructions, wherein when the instructions are run on a computer, the computer is enabled to perform the method according to any one of claims 1 to 12, or perform the method according to any one of claims 13 to 25, or perform the method according to any one of claims 26 to 28, or perform the method according to any one of claims 57 to 62, or perform the method according to any one of claims 63 to 70, or perform the method according to any one of claims 71 to 73.

98. A computer program product, comprising instructions, wherein when the instructions are run on a computer, the computer is enabled to perform the method according to any one of claims 1 to 12, or perform the method according to any one of claims 13 to 25, or perform the method according to any one of claims 26 to 28, or perform the method according to any one of claims 57 to 62, or perform the method according to any one of claims 63 to 70, or perform the method according to any one of claims 71 to 73.

99. A communication system, comprising a communication apparatus configured to perform the method according to any one of claims 1 to 12, a communication apparatus configured to perform the method according to any one of claims 13 to 25, and a communication apparatus configured to perform the method according to any one of claims 26 to 28; or a communication apparatus configured to perform the method according to any one of claims 57 to 62, a communication apparatus configured to perform the method according to any one of claims 63 to 70, and a communication apparatus configured to perform the method according to any one of claims 71 to 73.

100. A communication apparatus, wherein the communication apparatus is configured to perform the method according to any one of claims 1 to 12, or configured to perform the method according to any one of claims 13 to 25, or configured to perform the method according to any one of claims 26 to 28, or configured to perform the method according to any one of claims 57 to 62, or configured to perform the method according to any one of claims 63 to 70, or configured to perform the method according to any one of claims 71 to 73.
